(19) Europäisches Patentamt
European Patent Office
Office européen des brevets

(11) **EP 4 242 577 B1**

(12) **EUROPEAN PATENT SPECIFICATION**

(45) Date of publication and mention
of the grant of the patent:
**24.09.2025 Bulletin 2025/39**

(21) Application number: **23155961.8**

(22) Date of filing: **10.02.2023**

(51) International Patent Classification (IPC):
$G01B\ 9/02004^{(2022.01)}$    $G01B\ 9/02015^{(2022.01)}$
$G01B\ 9/02055^{(2022.01)}$    $G01B\ 9/0209^{(2022.01)}$
$G01B\ 9/02^{(2022.01)}$    $G01S\ 17/08^{(2006.01)}$
$G01S\ 7/48^{(2006.01)}$    $G01B\ 11/02^{(2006.01)}$

(52) Cooperative Patent Classification (CPC):
**G01B 9/02004; G01B 9/02027; G01B 9/02077;
G01B 9/02083; G01B 9/0209; G01B 11/026**

(54) **OPTICAL INTERFERENCE RANGE SENSOR**

OPTISCHER INTERFERENZBEREICHSSENSOR

CAPTEUR OPTIQUE DE PLAGE D'INTERFÉRENCE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **11.03.2022 JP 2022038129**

(43) Date of publication of application:
**13.09.2023 Bulletin 2023/37**

(73) Proprietor: **OMRON Corporation
Kyoto 600-8530 (JP)**

(72) Inventors:
• **NAGASAKI, Yusuke
Kyoto-shi, 600-8530 (JP)**
• **TAKASHIMA, Jun
Kyoto-shi, 600-8530 (JP)**

(74) Representative: **HKW Intellectual Property PartG
mbB
Theresienhöhe 12
80339 München (DE)**

(56) References cited:
**JP-A- 2013 238 474**

• **ALEXANDRE CABRAL ET AL: "Dual-frequency
sweeping interferometry for absolute metrology
of long distances", OPTICAL ENGINEERING, vol.
49, no. 8, 1 August 2010 (2010-08-01),
BELLINGHAM, pages 085601, XP055361561,
ISSN: 0091-3286, DOI: 10.1117/1.3481105**

EP 4 242 577 B1

**Description**

CROSS-REFERENCES TO RELATED APPLICATIONS

This application claims priority to Japanese Patent Application No. 2022-038129 filed on March 11, 2022.

FIELD

The present invention relates to an optical interference range sensor.

BACKGROUND

In recent years, optical range sensors that contactlessly measure the distance to a measurement target have become widely used. For example, known optical range sensors include optical interference range sensors that generate an interference beam by interference between a reference beam and a measurement beam from a light beam projected from a wavelength-swept light source and measure the distance to a measurement target based on the interference beam.

As this type of optical interference range sensor, a movement detection device for detecting a movement of a predetermined zone of a surface of a vibrating object has conventionally been known that includes: a means for generating a laser beam having a predetermined coherence length; a means for separating this laser beam into a measurement beam and a reference beam; a delay means for delaying the reference beam relative to the measurement beam by a time interval sufficient for the measurement beam to travel through a predetermined distance at least corresponding to the coherence length; a combining means for combining the delayed reference beam with the measurement beam to form a combination beam; a means for subdividing the combination beam into a plurality of substantially equal component beams; a wave-guiding means for guiding each of the component beams along a separate optical path to an intermediate location spaced from the predetermined zone substantially by one-half of the distance traveled by the beams in the predetermined time interval; a means for reflecting a portion of each of the component beams at respective positions back into respective reflection paths; a means for directing the remainder of each of the component beams from the respective intermediate positions to the predetermined zone, reflecting a predominant part of each of the directed beams from the predetermined zone toward at least the respective intermediate positions and the respective paths, combining the remaining measurement beam portion of each return component beam with the reference beam portion of a predetermined portion of each component beam so as to cause them to coherently interfere with each other, thus modulating the return light beams in dependence on a movement of the predetermined zone relative to the respective intermediate positions; and a demodulating means for demodulating the return light beams and indicating the movement of the predetermined zone (see JP 2686124A).

JP 2686124A is an example of background art.

JP 2013 - 238 474 A discloses a laser radar device including: a frequency modulator for frequency-modulating coherent laser beams from a coherent laser light source with predetermined modulation frequencies and modulation bandwidths; a wavelength conversion element for converting the wavelength of the coherent laser beams; a first optical distributor for distributing the coherent laser beams to local light emission and transmission light outputted to a target object; an optical mixer for multiplexing reflection light from the target object of the transmission light and local light emission; a light receiver for converting a light signal to an electric signal; and a signal processing unit for receiving an output electric signal converted to an electric signal from the optical mixer and computing distance to the target object and velocity of the target object based on the output electric signal.

"Dual-frequency sweeping interferometry for absolute metrology of long distances" by Alexandre Cabral et al. discloses that frequency sweeping interferometry (FSI) is a technique where absolute distance measurements are made without ambiguity, using synthetic wavelengths resulting from frequency sweeps. Accuracy is mainly dependent on the synthetic wavelength measurement using a Fabry-Pérot interferometer to count resonances as frequency sweeps. Measurement uncertainty increases with distance due to propagation of uncertainty in the synthetic wavelength measurement. For large distances, the number of fringes dominates performance, leading to a linear decrease of accuracy with range. To overcome this problem, the dual FSI concept was introduced, where the measurement process for large distances is reduced to the close-range case, by limiting the interferometer optical path difference.

SUMMARY

Here, in the case of measuring the distance to a measurement target in uniform motion, conventionally, the influence of the Doppler effect, i.e., a Doppler shift is suppressed by calculating an average value using current distance information and the previous distance information.

However, for example, in the case of measuring the distance to a measurement target that is a vibrating object vibrating at a predetermined frequency, the distance to the target changes with acceleration. For this reason, the shift amount due to the Doppler effect in the current distance information may differ from the shift amount due to the Doppler effect in the previous distance information. As a result, there is a concern in the conventional method that even if an average value is calculated, shifts (fluctuation) may occur in dependence on acceleration, and the distance cannot be measured accurately.

The present invention has been made in view of the foregoing circumstances, and one object of the invention is to provide an optical interference range sensor capable of measuring the distance to a measurement target with high accuracy even if its distance changes with acceleration.

An optical interference range sensor according to one aspect of the present invention includes the features of claim 1.

According to this aspect, the average distance value is calculated based on the measured distance, the first distance information indicating the distance based on the light beam projected using the first sweep frequency pattern, and the second distance information indicating the distance based on the light beam projected using the second sweep frequency pattern, of the past distance information regarding multiple measurements stored in the storage unit. This can reduce shifts (fluctuation) dependent on the acceleration that occur in the conventional method when, for example, the distance to the measurement target, such as a vibrating object, changes with acceleration. Accordingly, using this average distance value enables highly accurate measurement of the distance to the measurement target T that changes with acceleration.

The first distance information indicates a past distance once before the measured distance, and the second distance information indicates a past distance twice before the measured distance.

According to this aspect, the average distance value can be easily calculated based on the distances obtained in the recent three measurements including the current distance (at the current point in time).

In the above aspect, the average distance value calculation unit calculates the average distance value based on a first average value of the measured distance and the distance indicated by the first distance information, and a second average value of the distance indicated by the first distance information and the distance indicated by the second distance information.

According to this aspect, an average distance value in which shifts (fluctuation) dependent on the acceleration have been reduced can be calculated more easily when the first sweep frequency pattern and the second sweep frequency pattern are alternately used.

In the above aspect, the average distance value calculation unit may calculate the average distance value based on the measured distance, the first distance information, the second distance information, and at least one piece of third distance information different from the first distance information and the second distance information, of the past distance information regarding multiple measurements stored in the storage unit.

According to this aspect, shifts (fluctuation) dependent on the acceleration can be further reduced.

In the above aspect, the first sweep frequency pattern may be a pattern that increases a sweep frequency over time, and the second sweep frequency pattern may be a pattern that decreases the sweep frequency over time.

According to this aspect, the first sweep frequency pattern is an up-chirp signal, the second sweep frequency pattern is a down-chirp signal, and the sweep frequency signal in the light source is a chirp signal (also called a "sweep signal"). Accordingly, the interferometer can easily generate an interference beam dependent on the optical path length difference between the measurement beam and the reference beam.

In the above aspect, the light source may alternately use the first sweep frequency pattern and the second sweep frequency pattern.

According to this aspect, the swept wavelength of the light beam projected from the light source can be alternately made long and short.

In the above aspect, the processing unit may further include a frequency conversion unit configured to convert the electrical signal converted by the light-receiving unit to a frequency spectrum, and the distance to the measurement target may be measured based on the frequency spectrum.

According to this aspect, the electrical signal in the temporal domain is converted to a frequency spectrum in the frequency domain, thus facilitating analysis of the frequency component included in the frequency spectrum.

In the above aspect, the processing unit may further include a distance conversion unit configured to convert the frequency spectrum converted by the frequency conversion unit to the distance to the measurement target.

According to this aspect, the distance to the measurement target can be easily measured by converting the frequency spectrum to the distance.

According to the present invention, the distance to the measurement target can be measured with high accuracy even if the distance changes with acceleration.

BRIEF DESCRIPTION OF THE DRAWINGS

FIG. 1 is a schematic diagram of an external appearance showing an outline of a displacement sensor 10 according to the present disclosure.

FIG. 2 is a flowchart showing a procedure for measuring a measurement target T with use of the displacement sensor 10 according to the present disclosure.

FIG. 3 is a functional block diagram showing an overview of a sensor system 1 that uses the displacement sensor 10 according to the present disclosure.

FIG. 4 is a flowchart showing a procedure for measuring a measurement target T with use of the sensor system 1 that uses the displacement sensor 10 according to the present disclosure.

FIG. 5A is a diagram illustrating the principle by which the displacement sensor 10 according to the present disclosure measures the target object T.

FIG. 5B is a diagram illustrating another principle by which the displacement sensor 10 according to the present disclosure measures the measurement target T.

FIG. 6A is a perspective view showing a schematic configuration of a sensor head 20.

FIG. 6B is a schematic view of an internal structure of the sensor head 20.

FIG. 7 is a block diagram illustrating signal processing performed by a controller 30.

FIG. 8 is a flowchart showing a method for calculating the distance to the measurement target T that is executed by a processing unit 59 of the controller 30.

FIG 9A shows how a waveform signal (voltage vs time) is subjected to frequency conversion into a spectrum (voltage vs frequency).

FIG. 9B shows how a spectrum (voltage vs frequency) is subjected to distance conversion into a spectrum (voltage vs distance).

FIG. 9C shows how peaks are detected based on a spectrum (voltage vs distance), and corresponding distance values are calculated.

FIG. 10 is a schematic diagram showing a schematic configuration of an optical interference range sensor 100 according to an embodiment of the present invention.

FIG. 11 is a diagram for illustrating the relationship between sweep frequency and measured distance.

FIG. 12 is a graph showing an example of an average distance value calculated by an average distance calculation unit 153 for the measurement target T.

FIG. 13 is a graph that enlarges a partial range of the graph shown in FIG. 12.

FIGS. 14A to 14C show variations of interferometers that generate an interference beam using a measurement beam and a reference beam.

DETAILED DESCRIPTION

Preferable embodiments of the present invention will be described in detail with reference to the attached drawings. Note that the following embodiments are only for giving specific examples for carrying out the present invention, and is not intended to interpret the present invention in a limited manner. To facilitate understanding of the description, the same constituent elements in the drawings are assigned the same signs to the extent possible, and redundant descriptions may be omitted.

Summary of Displacement Sensor

Firstly, a summary of a displacement sensor according to the present disclosure will be described.

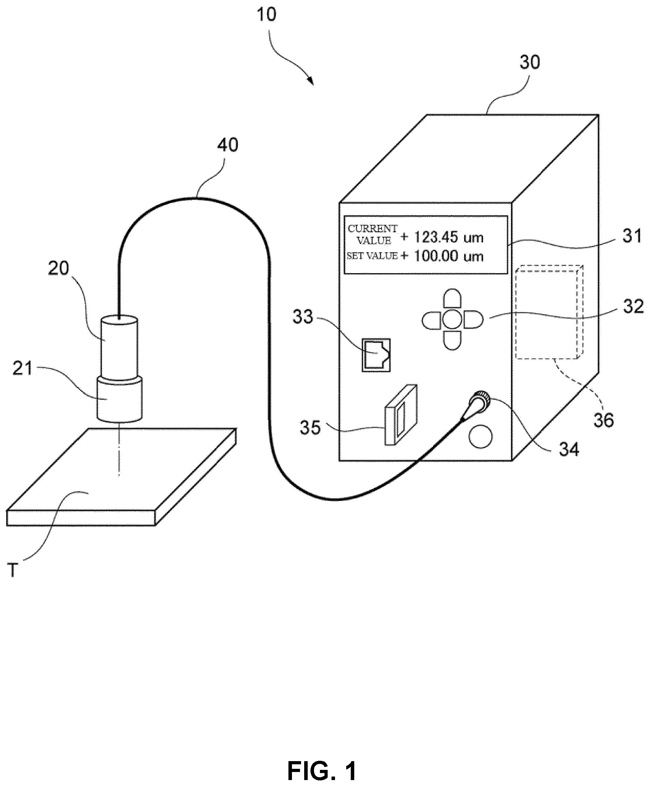

FIG. 1 is a schematic diagram of an external appearance showing an outline of a displacement sensor 10 according to the present disclosure. As shown in FIG. 1, the displacement sensor 10 includes a sensor head 20 and a controller 30, and measures displacement of a measurement target T (distance to the measurement target T).

The sensor head 20 and the controller 30 are connected by an optical fiber cable 40. An objective lens 21 is attached to the sensor head 20. The controller 30 includes a display unit 31, a setting unit 32, an external interface (I/F) unit 33, an optical fiber cable connector 34, and an external storage unit 35, and also contains a measurement processing unit 36.

The sensor head 20 radiates a light beam output from the controller 30 toward the measurement target T, and receives a reflected beam from the measurement target T. The sensor head 20 contains reference surfaces for reflecting a light beam that is output from the controller 30 and received via the optical fiber cable 40 and causing this reflected beam to interfere with the aforementioned reflected beam from the measurement target T.

Note that the objective lens 21 attached to the sensor head 20 is removable. The objective lens 21 can be replaced by another objective lens having an appropriate focal length in accordance with the distance between the sensor head 20 and the measurement target T. Alternatively, a variable-focus objective lens may be used.

Furthermore, when the sensor head 20 is installed, a guide beam (visible light) may be radiated toward the measurement object T, and the sensor head 20 and/or the measurement object T may be placed so that the measurement object T is appropriately positioned within a measurement area of the displacement sensor 10.

The optical fiber cable 40 is connected to the optical fiber cable connector 34 arranged on the controller 30 and connects the controller 30 to the sensor head 20. The optical fiber cable 40 thus guides a light beam projected from the controller 30 to the sensor head 20 and also guides return beams from the sensor head 20 to the controller 30. Note that the optical fiber cable 40 can be attached to and detached from the sensor head 20 and the controller 30, and may be an optical fiber with any of various lengths, thicknesses, and characteristics.

The display unit 31 is a liquid crystal display, an organic EL display, or the like, for example. The display unit 31 displays set values for the displacement sensor 10, the amount of light of return beams from the sensor head 20, and measurement results such as displacement of the measurement target T (distance to the measurement target T) measured by the displacement sensor 10.

The setting unit 32 allows a user to operate a mechanical button or a touch panel, for example, to configure settings necessary for measuring the measurement target T. Some or all of these necessary settings may be configured in advance, or may be configured from an externally connected device (not shown) that is connected to the external I/F unit 33. The externally connected device may be connected by wire or wirelessly via a network.

Here, the external I/F unit 33 is constituted by, for example, Ethernet (registered trademark), RS232C, analog output, or the like. The external I/F unit 33 may be connected to another connection device so that necessary settings are configured from the externally connected device, and may also output the results of measurement performed by the displacement sensor 10 to the externally connected device, for example.

Further, settings necessary for measuring the measurement target T may also be configured by the controller 30 retrieving data stored in the external storage unit 35. The external storage unit 35 is an auxiliary storage device such as a USB (Universal Serial Bus) memory. Settings or the like necessary for measuring the measurement target T are stored therein in advance.

The measurement processing unit 36 in the controller 30 includes, for example, a wavelength-swept light source that projects a light beam while continuously varying the wavelength, light-receiving elements that receive return beams from the sensor head 20 and convert the received beams to an electrical signal, a signal processing circuit that processes the electrical signal, and the like. The measurement processing unit 36 performs various processes using a controller, a storage, and the like based on return beams from the sensor head 20 so that the displacement of the measurement target T (distance to the measurement target T) is ultimately calculated. The details of the processing will be described later.

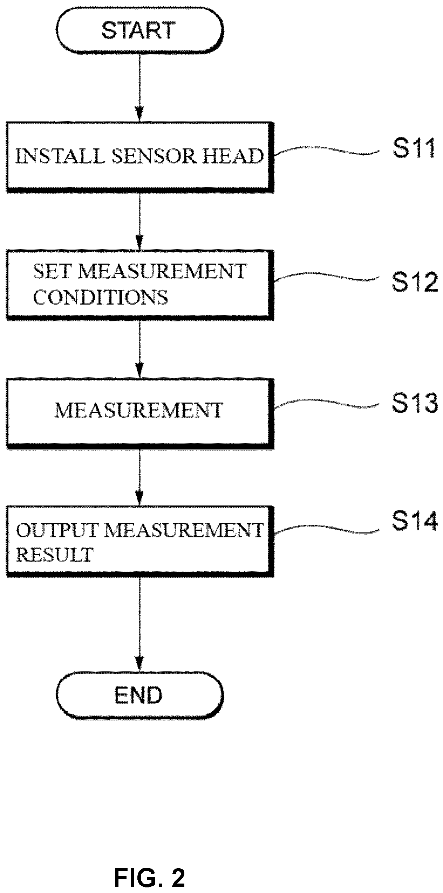

FIG. 2 is a flowchart showing a procedure for measuring a measurement target T with use of the displacement sensor 10 according to the present disclosure. The procedure includes steps S11 to S14, as shown in FIG. 2.

In step S11, the sensor head 20 is installed. For example, a guide beam is radiated from the sensor head 20 toward the measurement target T, and the sensor head 20 is installed at an appropriate position while referencing the radiated guide light.

Specifically, the amount of light of return beams received from the sensor head 20 may be displayed in the display unit 31 in the controller 30. The user may also adjust the orientation of the sensor head 20, the distance (height position) to the measurement target T, or the like while checking the amount of received light. Basically, if the light beam from the sensor head 20 is radiated more vertically (at an angle closer to vertical) relative to the measurement target T, the amount of light of reflected beams from the measurement target T becomes larger, and the amount of light of return beams received from the sensor head 20 also becomes larger.

The objective lens 21 may also be replaced with one having an appropriate focal length in accordance with the distance between the sensor head 20 and the measurement target T.

If appropriate settings cannot be configured (e.g., a necessary amount of received light for measurement cannot be obtained, or the focal length of the objective lens 21 is inappropriate etc.) when the measurement target T is measured, the user may be notified by displaying an error message, an incomplete setting message, or the like in the display unit 31 or outputting such a message to the externally connected device.

In step S12, various measurement conditions are set to measure the measurement target T. For example, the user sets unique calibration data (function etc. for correcting linearity) that the sensor head 20 has by operating the setting unit 32 in the controller 30.

Various parameters may also be set. For example, the sampling time, the measurement range, a threshold for determining whether to regard measurement results as normal or abnormal, or the like are set. Further, a measurement period may be set in accordance with characteristics of the measurement target T, such as the reflectance and material of the measurement target T, and a measurement mode or the like corresponding to the material of the measurement target T may also be set.

Note that these measurement conditions and various parameters are set by operating the setting unit 32 in the controller 30, but may alternatively be set from the externally connected device or may be set by retrieving data from the external storage unit 35.

In step S13, the measurement target T is measured with the sensor head 20 installed in step S11 in accordance with the measurement conditions and various parameters that are set in step S12.

Specifically, in the measurement processing unit 36 in the controller 30, the wavelength-swept light source projects a light beam, the light-receiving elements receive return beams from the sensor head 20, the signal processing circuit performs, for example, frequency analysis, distance conversion, peak detection, and the like to calculate displacement of the measurement target T (distance to the measurement target T). The details of specific measurement processing will be described later.

In step S14, the result of measurement in step S13 is output. For example, the displacement of the measurement target T (distance to the measurement target T) or the like measured in step S13 is displayed in the display unit 31 in the controller 30 or output to the externally connected device.

In addition, whether the displacement of the measurement target T (distance to the measurement target T) measured in step S13 is in a normal range or is abnormal based on the threshold set in step S12 may also be displayed or output as a measurement result. Furthermore, the measurement conditions, various parameters, the measurement mode, or the like that are set in step S12 may also be displayed or output together.

Overview of system that includes displacement sensor

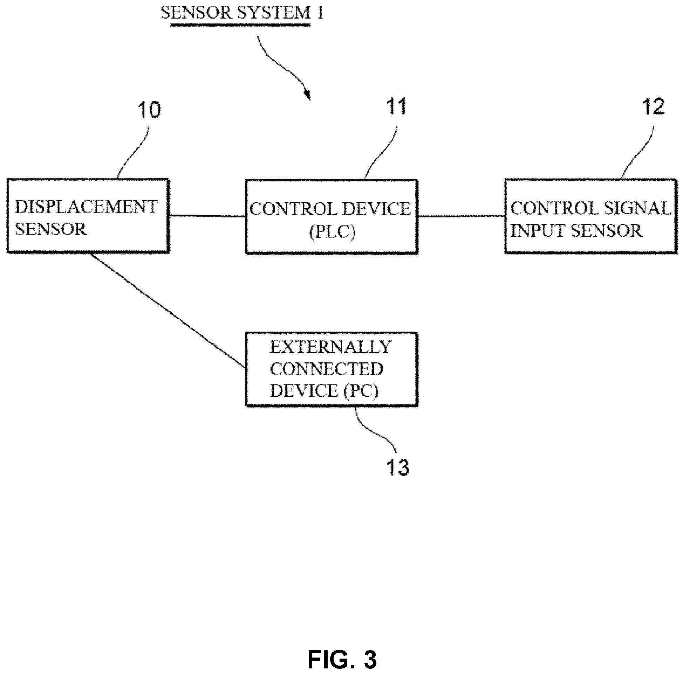

FIG. 3 is a functional block showing an overview of a sensor system 1 that uses the displacement sensor 10 according to the present disclosure. The sensor system 1 includes the displacement sensor 10, a control device 11, a control signal input sensor 12, and an externally connected device 13, as shown in FIG. 3. Note that the displacement sensor 10 is connected to the control device 11 and the externally connected device 13 by a communication cable or an external connection code (which may include an external input line, an external output line, a power line, etc.), for example. The control device 11 and the control signal input sensor 12 are connected by a signal line.

The displacement sensor 10 measures displacement of the measurement target T (distance to the measurement target T), as described with reference to FIGS. 1 and 2. The displacement sensor 10 may also output the measurement results or the like to the control device 11 and the externally connected device 13.

The control device 11 is a PLC (Programmable Logic Controller), for example, and gives the displacement sensor 10 various instructions when the displacement sensor 10 measures the measurement target T.

For example, the control device 11 may output a measurement timing signal to the displacement sensor 10 based on an input signal from the control signal input sensor 12 connected to the control device 11, and may also output a zero-reset command signal (a signal for setting a current measurement value to 0) or the like to the displacement sensor 10.

The control signal input sensor 12 outputs, to the control device 11, an on/off signal to indicate the timing for the displacement sensor 10 to measure the measurement target T. For example, the control signal input sensor 12 may be installed near a production line in which the measurement target T moves, and may output the on/off signal to the control device 11 in response to detecting that the measurement target T has moved to a predetermined position.

The externally connected device 13 is a PC (Personal Computer), for example. The user can configure various setting to the displacement sensor 10 by operating the externally connected device 13.

As a specific example, the measurement mode, the work mode, the measurement period, the material of the measurement target T, and the like are set.

An "internally synchronized measurement mode", in which measurement periodically starts within the control device 11, or an "externally synchronized measurement mode", in which measurement starts in response to an input signal from outside the control device 11, or the like can be selected as a setting of the measurement mode.

An "operation mode", in which the measurement target T is actually measured, an "adjustment mode", in which measurement conditions for measuring the measurement target T are set, or the like can be selected as a work mode setting.

The "measurement period" refers to a period for measuring the measurement target T and may be set in accordance with the reflectance of the measurement target T. Even if the measurement target T has a low reflectance, the measurement target T can be appropriately measured by lengthening the measurement period to set an appropriate measurement period.

As a mode for the measurement target T, a "rough surface mode", which is suitable when the components of the reflected beam reflected from the measurement target T include a relatively large diffuse reflection, a "specular mode", which is suitable when the components of the reflected beam include a relatively large specular reflection, an intermediate "standard mode", or the like can be selected.

Thus, the measurement target T can be measured with higher accuracy by configuring appropriate settings in accordance with the reflectance and material of the measurement target T.

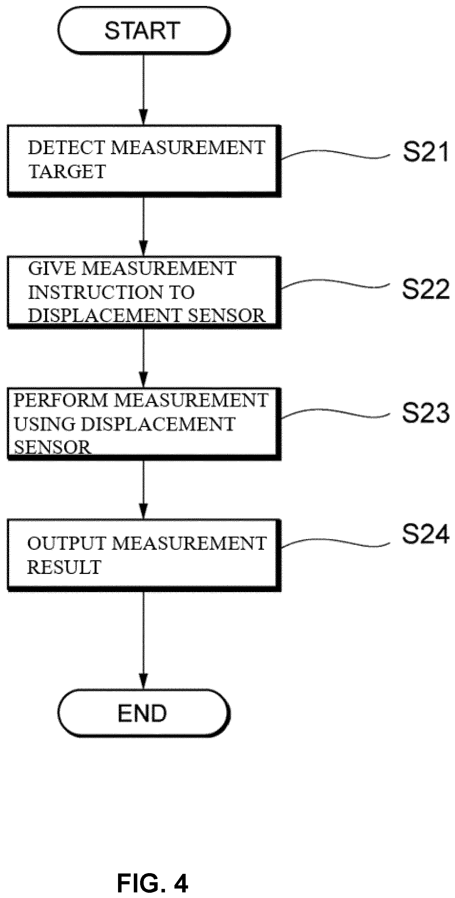

FIG. 4 is a flowchart showing a procedure for measuring the measurement target T with use of the sensor system 1 that uses the displacement sensor 10 according to the present disclosure. As shown in FIG. 4, this procedure is for the case of the aforementioned externally synchronized measurement mode and includes steps S21 to S24.

In step S21, the sensor system 1 detects the measurement target T, which is an object to be measured. Specifically, the control signal input sensor 12 detects that the measurement target T has moved to a predetermined position on a production line.

In step S22, the sensor system 1 gives an instruction to measure the measurement target T detected in step S21, with use of the displacement sensor 10. Specifically, the control signal input sensor 12 indicates the timing of measuring the measurement target T detected in step S21 by outputting an on/off signal to the control device 11. The control device 11 outputs a measurement timing signal to the displacement sensor 10 based on the on/off signal to give an instruction to measure the measurement target T.

In step S23, the displacement sensor 10 measures the measurement target T. Specifically, the displacement sensor 10 measures the measurement target T based on the measurement instruction received in step S22.

In step S24, the sensor system 1 outputs the result of measurement in step S23. Specifically, the displacement sensor 10 causes the display unit 31 to display the result of measurement processing, and/or outputs the result to the control device 11, the externally connected device 13, or the like via the external I/F unit 33.

Note that the above description has been given, with reference to FIG. 4, of the procedure in the case of the externally synchronized measurement mode in which the measurement target T is measured upon the control signal input sensor 12 detecting the measurement target T. However, there is no limitation thereto. In the case of the internally synchronized measurement mode, for example, an instruction to measure the measurement target T is given to the displacement sensor 10 upon a measurement timing signal being generated based on a preset period, instead of steps S21 and S22.

Next, a description will be given of the principle by which the displacement sensor 10 according to the present disclosure measures the measurement target T.

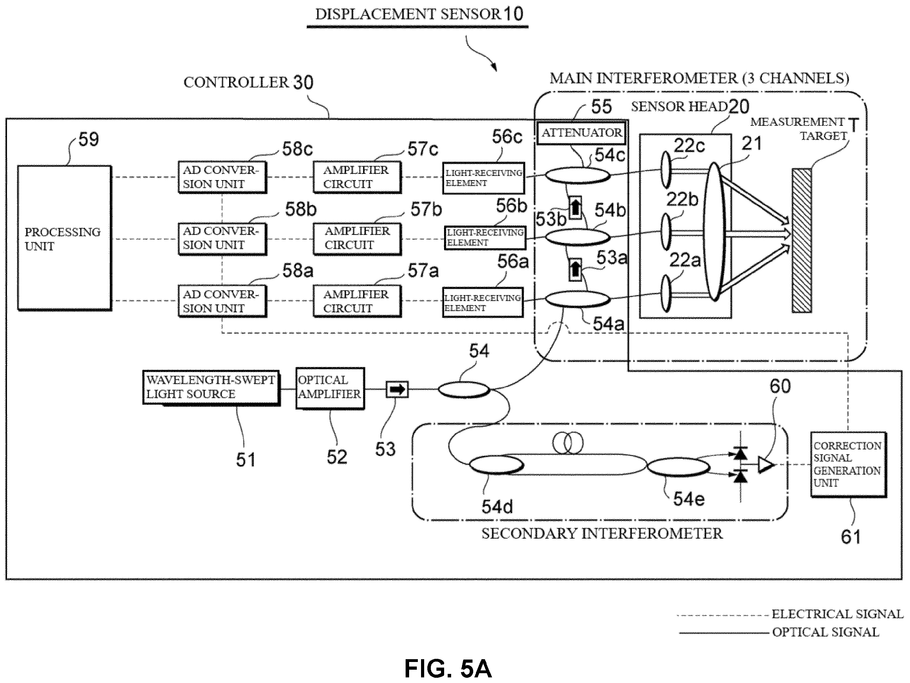

FIG. 5A is a diagram illustrating a principle by which the displacement sensor 10 according to the present disclosure measures a measurement target T. As shown in FIG. 5A, the displacement sensor 10 includes the sensor head 20 and the controller 30. The sensor head 20 includes the objective lens 21 and a plurality of collimating lenses 22a to 22c. The controller 30 includes a wavelength-swept light source 51, an optical amplifier 52, a plurality of isolators 53, 53a, and 53b, a plurality of optical couplers 54 and 54a to 54e, an attenuator 55, a plurality of light-receiving elements (e.g., photodetectors (PD)) 56a to 56c, a plurality of amplifier circuits 57a to 57c, a plurality of analog-to-digital (AD) conversion units (e.g., analog-to-digital converters) 58a to 58c, a processing unit (e.g., processor) 59, a balance detector 60, and a correction signal generation unit 61.

The wavelength-swept light source 51 projects a wavelength-swept laser beam. The wavelength-swept light source 51 can be realized at low cost by, for example, applying a method of modulating a VCSEL (Vertical Cavity Surface Emitting Laser) with current since mode hopping is unlikely to occur due to a short resonator length, and the wavelength can be easily varied.

The optical amplifier 52 amplifies the beam projected from the wavelength-swept light source 51. The optical amplifier 52 is an EDFA (erbium-doped fiber amplifier), for example, and may be an optical amplifier dedicated to 1550 nm, for example.

The isolator 53 is an optical element through which an incident light beam is unidirectionally transmitted, and may immediately follow the wavelength-swept light source 51 in order to prevent the effect of noise generated by return beams.

Thus, the light beam projected from the wavelength-swept light source 51 is amplified by the optical amplifier 52, passes through the isolator 53, and is split into beams proceeding to a main interferometer and a secondary interferometer by the optical coupler 54. For example, the optical coupler 54 may split the light beam into the beams proceeding to the main and secondary interferometers at a ratio of 90:10 to 99:1.

The light beam that is split and proceeds to the main interferometer is further split into a beam in a direction toward the sensor head 20 and a beam in a direction toward the second-stage optical coupler 54b by the first-stage optical coupler 54a.

The light beam that is split in the direction toward the sensor head 20 by the first-stage optical coupler 54a passes through the collimating lens 22a and the objective lens 21 from the leading end of an optical fiber cable in the sensor head 20, and is radiated toward the measurement target T. Then, a light beam reflected at a reference surface, which is the leading end (end face) of this optical fiber cable, interferes with a light beam reflected at the measurement target T, and an interference beam is generated. The generated interference beam returns to the first-stage optical coupler 54a, and is thereafter received by the light-receiving element 56a and converted into an electrical signal.

The light beam that is split in the direction toward the second-stage optical coupler 54b by the first-stage optical coupler 54a proceeds toward the second-stage optical coupler 54b via the isolator 53a, and is further split in a direction toward the sensor head 20 and a direction toward the third-stage optical coupler 54c by the second-stage optical coupler 54b. The light beam that is split in the direction toward the sensor head 20 from the optical coupler 54b passes through the collimating lens 22b and the objective lens 21 from the leading end of an optical fiber cable in the sensor head 20, as with the first stage, and is radiated toward the measurement target T. Then, a light beam reflected at a reference surface, which is the leading end (end face) of this optical fiber cable, interferes with a light beam reflected at the measurement target T, and an interference beam is generated. The generated interference beam returns to the second-stage optical coupler 54b, and is split into beams in a direction toward the isolator 53a and a direction toward the light-receiving element 56b by the optical coupler 54b. The light beam that is split in the direction toward the light-receiving element 56b from the optical coupler 54b is received by the light-receiving element 56b and converted into an electrical signal. Meanwhile, the isolator 53a is configured to transmit a light beam from the previous-stage optical coupler 54a toward the latter-stage optical coupler 54b and cut off a light beam from the latter-stage optical coupler 54b toward the previous-stage optical coupler 54a. Therefore, the beam split in the direction toward the isolator 53a from the optical coupler 54b is cut off.

The light beam that is split in the direction toward the third-stage optical coupler 54c by the second-stage optical coupler 54b proceeds toward the third-stage optical coupler 54c via the isolator 53b, and is further split in the direction toward the sensor head 20 and a direction toward the attenuator 55 by the third-stage optical coupler 54c. The light beam that is split in the direction toward the sensor head 20 from the optical coupler 54c passes through the collimating lens 22c and the objective lens 21 from the leading end of an optical fiber cable in the sensor head 20, as with the first and second stages, and is radiated toward the measurement target T. Then, a light beam reflected at the reference surface, which is the leading end (end face) of this optical fiber cable, interferes with a light beam reflected at the measurement target T, and an interference beam is generated. The generated interference beam returns to the third-stage optical coupler 54c, and is split into beams in a direction toward the isolator 53b and a direction toward the light-receiving element 56c by the optical coupler 54c. The light beam that is split in the direction toward the light-receiving element 56c from the optical coupler 54c is received by the light-receiving element 56c and converted into an electrical signal. Meanwhile, the isolator 53b is configured to transmit a light beam from the previous-stage optical coupler 54b toward the latter-stage optical coupler 54c and cut off a light beam from the latter-stage optical coupler 54c toward the previous-stage optical coupler 54b. Therefore, the beam split in the direction toward the isolator 53b from the optical coupler 54c is cut off.

Note that the light beam that is split in a direction other than the direction toward the sensor head 20 by the third-stage optical coupler 54c is not used to measure the measurement target T. Therefore, it is favorable to attenuate this light beam with the attenuator 55, which is a terminator or the like, so as not to be reflected and returned.

Thus, the main interferometer is an interferometer that has three stages of optical paths (three channels) each having an optical path length difference that is twice (round trip) the distance from the leading end (end face) of the optical fiber cable of the sensor head 20 to the measurement target T, and three interference beams corresponding to respective optical path length differences are generated.

The light-receiving elements 56a to 56c receive the interference beams from the main interferometer and generate electrical signals in accordance with the amount of light of the light beams received, as mentioned above.

The amplifier circuits 57a to 57c amplify the electrical signals output from the light-receiving elements 56a to 56c, respectively.

The AD conversion units 58a to 58c receive the electrical signals from the respective amplifier circuits 57a to 57c and convert these electrical signals from analog signals to digital signals (AD conversion). Here, the AD conversion units 58a to 58c perform AD conversion based on a correction signal from the correction signal generation unit 61 of the secondary interferometer.

The secondary interferometer obtains the interference signal in order to correct wavelength nonlinearities during the sweep with the wavelength-swept light source 51, and generates a correction signal called a K-clock.

Specifically, the light beam that is split and proceeds to the secondary interferometer by the optical coupler 54 is further split by the optical coupler 54d. Here, the optical paths of the split light beams are configured to have an optical path length difference using optical fiber cables with different lengths between the optical couplers 54d and 54e, and an interference beam corresponding to the optical path length difference is output from the optical coupler 54e, for example. The balance detector 60 receives the interference beam from the optical coupler 54e, and amplifies the optical signal and converts it to an electrical signal while removing noise by taking a difference from a signal of the opposite phase.

Note that the optical coupler 54d and the optical coupler 54e may split the light beam at a ratio of 50:50.

The correction signal generation unit 61 ascertains the wavelength nonlinearities during the sweep with the wavelength-swept light source 51 based on the electrical signal from the balance detector 60, generates a K-clock corresponding to the nonlinearities, and outputs the generated K-clock to the AD conversion units 58a to 58c.

Due to the wavelength nonlinearities during the sweep with the wavelength-swept light source 51, the wave intervals of the analog signals input to the AD conversion units 58a to 58c from the main interferometer are not equal. The AD conversion units 58a to 58c performs AD conversion (sampling) while correcting the sampling time based on the aforementioned K-clock so that the wave intervals are equal intervals.

Note that the K-clock is a correction signal used to sample the analog signal of the main interferometer, as mentioned above. Therefore, the K-clock needs to be generated so as to have a higher frequency than the analog signal of the main interferometer. Specifically, the optical path length difference provided between the optical coupler 54d and the optical coupler 54e in the secondary interferometer may be longer than optical path length differences between the leading ends (end faces) of the optical fiber cables in the main interferometer and the measurement target T. Alternatively, the correction signal generation unit 61 may increase the frequency by multiplication (e.g., by a factor of 8, etc.).

The processing unit 59 obtains the digital signals that have been subjected to AD conversion with its nonlinearities corrected respectively by the AD conversion units 58a to 58c, and calculates displacement of the measurement target T (distance to the measurement target T) based on this digital signal. Specifically, the processing unit 59 performs frequency conversion on the digital signal using fast Fourier transform (FFT), and calculates the distance by analyzing them. The details of processing at the processing unit 59 will be described later.

Note that the processing unit 59 is required to perform high-speed processing, and is therefore realized by an integrated circuit such as an FPGA (field-programmable gate array) in many cases.

Also, here, three stages of optical paths are provided in the main interferometer. The sensor head 20 radiates measurement beams from the respective optical paths toward the measurement target T, and the distance to the measurement target T, for example, is measured based on interference beams (return beams) obtained from the respective optical paths (multichannel). The number of channels in the main interferometer is not limited to three, and may alternatively be one or two, or may be four or more.

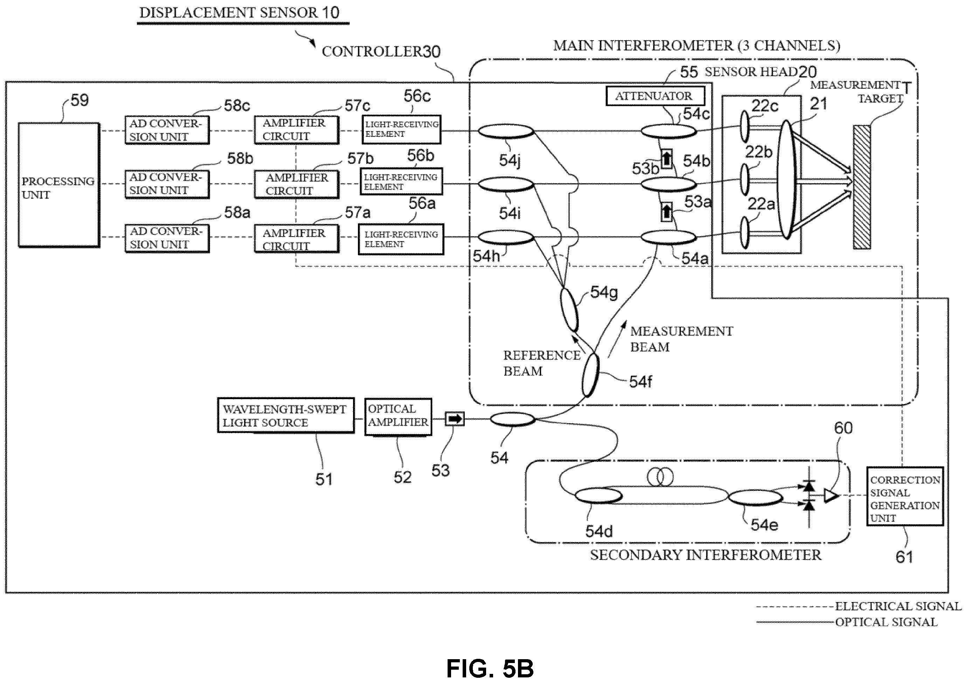

FIG. 5B is a diagram illustrating another principle by which a displacement sensor 10 according to the present disclosure may measure the measurement target T. As shown in FIG. 5B, this displacement sensor 10 includes a sensor head 20 and a controller 30. The sensor head 20 includes an objective lens 21 and a plurality of collimating lenses 22a to 22c. The controller 30 includes a wavelength-swept light source 51, an optical amplifier 52, a plurality of isolators 53, 53a and 53b, a plurality of optical couplers 54 and 54a to 54j, an attenuator 55, a plurality of light-receiving elements (e.g., photodetectors (PD)) 56a to 56c, a plurality of amplifier circuits 57a to 57c, a plurality of analog-to-digital (AD) conversion units (e.g., analog-to-digital converters) 58a to 58c, a processing unit (e.g., processor) 59, a balance detector 60, and a correction signal generation unit 61. The displacement sensor 10 shown in FIG. 5B has a configuration different from that of the displacement sensor 10 shown in FIG. 5A mainly in that the former has the optical couplers 54f to 54j. A principle of this different configuration will be described in detail in comparison with FIG. 5A.

The light beam projected from the wavelength-swept light source 51 is amplified by the optical amplifier 52, and is split into a beam proceeding to the main interferometer side and a beam proceeding to the secondary interferometer side by the optical coupler 54 via the isolator 53. The light beam that is split and proceeds to the main interferometer side is further split into a measurement beam and a reference beam by the optical coupler 54f.

The measurement beam is caused to pass through the collimating lens 22a and the objective lens 21 by the first-stage coupler 54a and radiated to the measurement target T, and is reflected at the measurement target T, as described with reference to FIG. 5A. Here, in FIG. 5A, the light beam reflected at the reference surface, which is the leading end (end face) of an optical fiber cable, interferes with the light beam reflected at the measurement target T, and an interference beam is generated. Meanwhile, in FIG. 5B, the reference surface that reflects the light beam is not provided. In other words, the light that is reflected at the reference surface as in FIG. 5A is not generated in FIG. 5B, and therefore, the measurement beam reflected at the measurement target T returns to the first-stage optical coupler 54a.

Similarly, the light beam that is split in the direction toward the second-stage optical coupler 54b from the first-stage optical coupler 54a is caused to pass through the collimating lens 22b and the objective lens 21 by the second-stage optical coupler 54b and radiated toward the measurement target T, and is reflected at the measurement target T and returns to the second-stage optical coupler 54b. The light beam that is split in the direction toward the third-stage optical coupler 54c from the second-stage optical coupler 54b is caused to pass through the collimating lens 22c and the objective lens 21 by the third-stage optical coupler 54c and radiated toward the measurement target T, and is reflected at the measurement target T and returns to the third-stage optical coupler 54c.

Meanwhile, the reference beam split by the optical coupler 54f is further split into beams proceeding to the optical couplers 54h, 54i, and 54j by the optical coupler 54g.

In the optical coupler 54h, the measurement beam that has been reflected at the measurement target T and output from the optical coupler 54a interferes with the reference beam output from the optical coupler 54g, and an interference beam is generated. This interference beam is received by the light-receiving element 56a and converted into an electrical signal. In other words, a light beam is split into the measurement beam and the reference beam by the optical coupler 54f, an interference beam is generated in correspondence with the optical path length difference between the optical path of the measurement beam (an optical path in which the light beam from the optical coupler 54f is reflected at the measurement target T via the optical coupler 54a, the collimating lens 22a and the objective lens 21 and reaches the optical coupler 54h) and the optical path of the reference beam (an optical path in which the light beam from the optical coupler 54f reaches the optical coupler 54h via the optical coupler 54g). This interference beam is received by the light-receiving element 56a and converted into an electrical signal.

Similarly, in the optical coupler 54i, an interference beam is generated in correspondence with the optical path length difference between the optical path of the measurement beam (an optical path in which the light beam from the optical coupler 54f is reflected at the measurement target T via the optical couplers 54a and 54b, the collimating lens 22b,

and the objective lens 21 and reaches the optical coupler 54i) and the optical path of the reference beam (an optical path in which the light beam from the optical coupler 54f reaches the optical coupler 54i via the optical coupler 54g). This interference beam is received by the light-receiving element 56b and converted into an electrical signal.

In the optical coupler 54j, an interference beam is generated in correspondence with the optical path length difference between the optical path of the measurement beam (an optical path in which the light beam from the optical coupler 54f is reflected at the measurement target T via the optical couplers 54a, 54b, and 54c, the collimating lens 22c, and the objective lens 21 and reaches the optical coupler 54j) and the optical path of the reference beam (an optical path in which the light beam from the optical coupler 54f reaches the optical coupler 54j via the optical coupler 54g). This interference beam is received by the light-receiving element 56c and converted into an electrical signal. Note that the light-receiving elements 56a to 56c may be balance photodetectors, for example.

Thus, the main interferometer has three stages of optical paths (three channels), and generates three interference beams corresponding to the respective optical path length differences between the measurement beams that are reflected at the measurement target T and input to the optical couplers 54h, 54i, and 54j and the reference beams that are input to the optical couplers 54h, 54i, and 54j via the optical couplers 54f and 54g.

Note that the optical path length difference between a measurement beam and a reference beam may also be set so as to be different among the three channels. For example, the optical path lengths from the optical coupler 54g may be different among the optical couplers 54h, 54i, and 54j.

The distance to the measurement target T or the like is measured based on the interference beams obtained from respective optical paths (multichannel).

Configuration of Sensor Head

Here, a structure of the sensor head used in the displacement sensor 10 will be described.

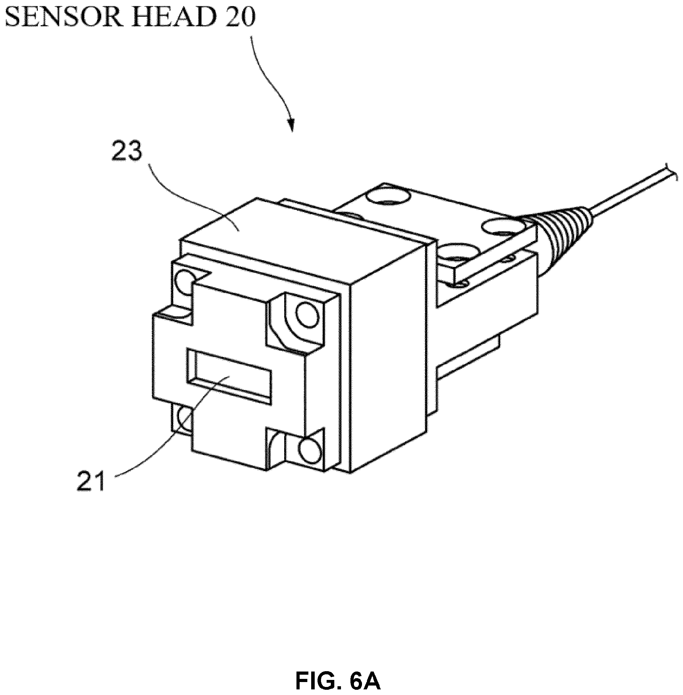

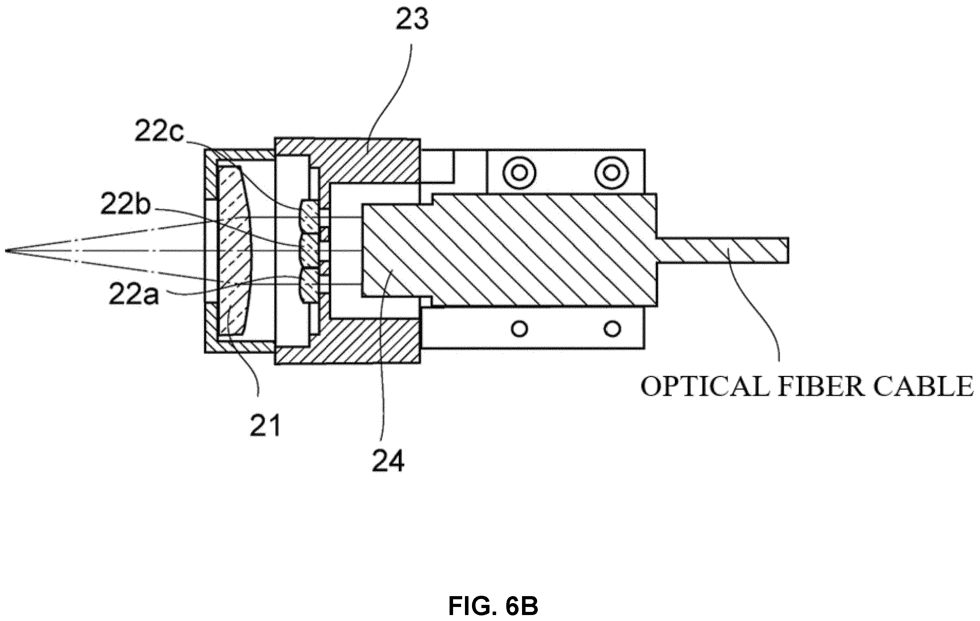

FIG. 6A is a perspective view showing a schematic configuration of the sensor head 20. FIG. 6B is a schematic view of an internal structure of the sensor head.

In the sensor head 20, the objective lens 21 and the collimating lenses are accommodated in a lens holder 23, as shown in FIG. 6A. For example, the individual sides of the objective lens holder 23 that surround the objective lens 21 are about 20 mm long, and the lens holder 23 is about 40 mm in length in the optical axis direction.

As shown in FIG. 6B, the lens holder 23 accommodates one objective lens 21 and three collimating lenes 22a to 22c. Light from the optical fiber cables are guided to the three collimating lenses 22a to 22c via an optical fiber array 24, and the light that has passed through the three collimating lenses 22a to 22c is radiated toward the measurement target T via the objective lens 21.

Thus, the optical fibers, the collimating lenses 22a to 22c, and the optical fiber array 24 are held together with the objective lens 21 by the lens holder 23 and constitute the sensor head 20.

The lens holder 23 that constitutes the sensor head 20 may be made of a metal (e.g., A2017) that has high strength and can be processed with high accuracy.

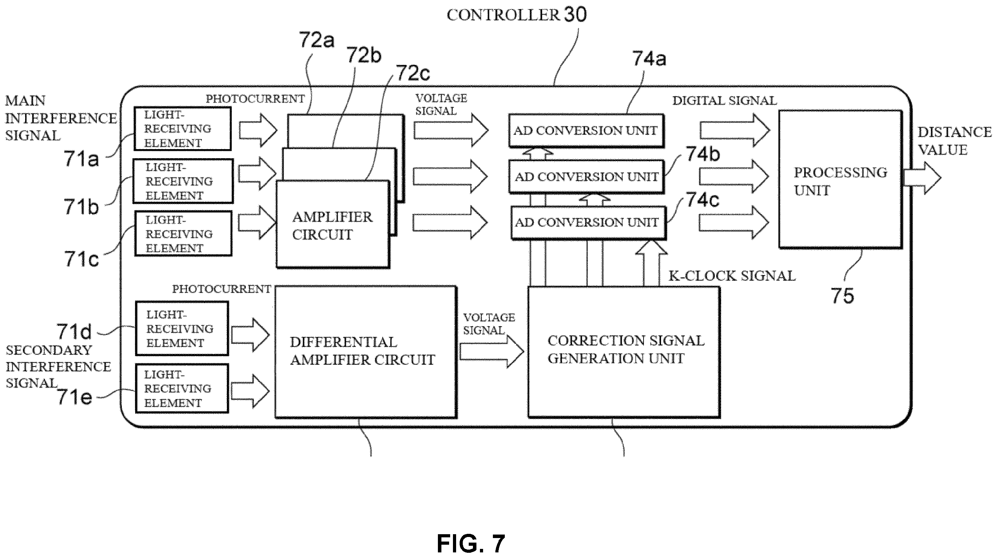

FIG. 7 is a block diagram illustrating signal processing in the controller 30. As shown in FIG. 7, the controller 30 includes a plurality of light-receiving elements 71a to 71e, a plurality of amplifier circuits 72a to 72c, a plurality of AD conversion units 74a to 74c, a processing unit 75, a differential amplifier circuit 76, and a correction signal generation unit 77.

In the controller 30, the light beam projected from the wavelength-swept light source 51 is split into a beam proceeding to the main interferometer and a beam proceeding to the secondary interferometer by the optical coupler 54, and the value of the distance to the measurement target T is calculated by processing main interference signals and secondary interference signals obtained respectively from the main and secondary interferometers, as illustrated in FIG. 5A.

The plurality of light-receiving elements 71a to 71c correspond to the light-receiving elements 56a to 56c shown in FIG. 5A, receive the main interference signals from the main interferometer, and output the received signals as current signals to the amplifier circuits 72a to 72c, respectively.

The plurality of amplifier circuits 72a to 72c convert the current signals to voltage signals (I-V conversion) and amplify these signals.

The plurality of AD conversion units 74a to 74c correspond to the AD conversion units 58a to 58c shown in FIG. 5A, and convert the voltage signal to a digital signal (AD conversion) based on a K-clock from the later-described correction signal generation unit 77.

The processing unit 75 corresponds to the processing unit 59 shown in FIG. 5A, converts the digital signals from the AD conversion units 74a to 74c to frequencies by means of FFT, analyzes the frequencies, and calculates the value of the distance to the measurement target T.

The plurality of light-receiving elements 71d to 71e and the differential amplifier circuit 76, which correspond to the balance detector 60 shown in FIG. 5A, receive interference beams from the secondary interferometer, output interference signals one of which has an inverted phase, and amplify the interference signals and convert these signals to a voltage signal while removing noise by taking a difference between the two signals.

The correction signal generation unit 77 corresponds to the correction signal generation unit 61 shown in FIG. 5A, binarizes the voltage signal using a comparator, generates a K-clock, and outputs the generated K-clock to the AD conversion units 74a to 74c. The K-clock needs to be generated so as to have a higher frequency than the analog signal of the main interferometer. Therefore, the correction signal generation unit 77 may increase the frequency by multiplication (e.g., by a factor of 8 etc.).

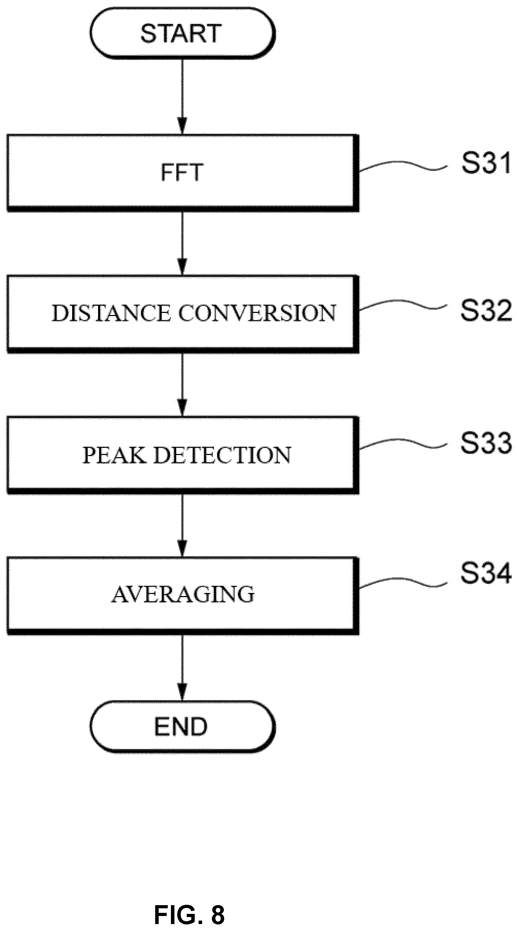

FIG. 8 is a flowchart showing a method for calculating the distance to the measurement target T that is executed by the processing unit 59 in the controller 30. This method includes steps S31 to S34, as shown in FIG. 8.

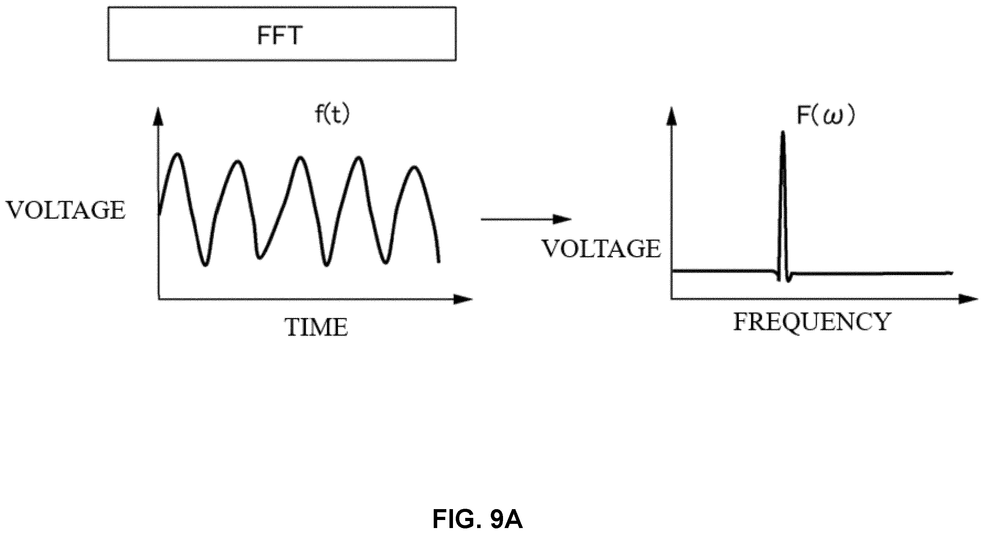

In step S31, the processing unit 59 performs frequency conversion on a waveform signal (voltage vs time) into a spectrum (voltage vs frequency) by means of the following FFT. FIG. 9A shows how the waveform signal (voltage vs time) is subjected to frequency conversion into the spectrum (voltage vs frequency).

[Math 1]

$$\sum_{t=0}^{N-1} f(t) exp\left(-\mathrm{i}\frac{2\pi\omega t}{N}\right) = F(\omega)$$

$N$ : Number of data points

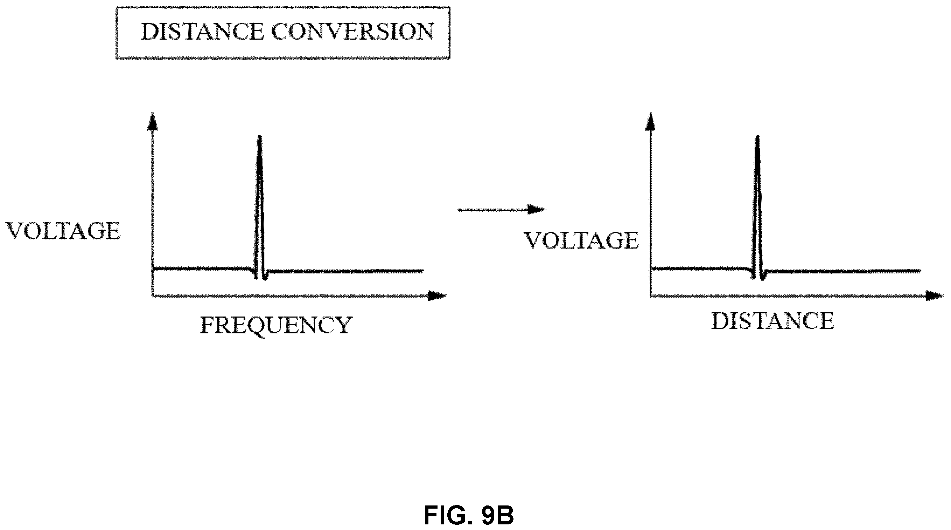

In step S32, the processing unit 59 performs distance conversion on the spectrum (voltage vs frequency) into a spectrum (voltage vs distance). FIG. 9B shows how the spectrum (voltage vs frequency) is subjected to distance conversion into the spectrum (voltage vs distance).

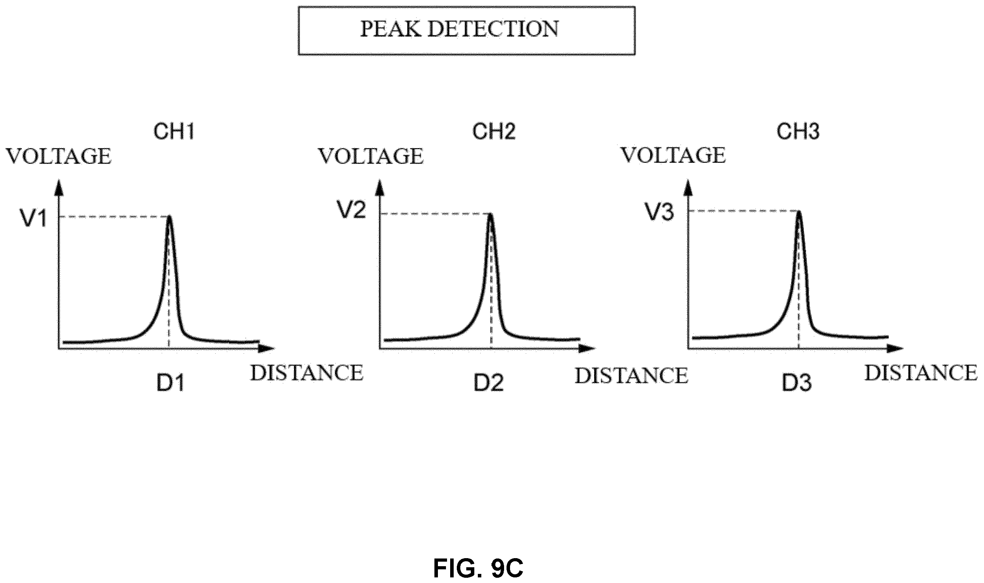

In step S33, the processing unit 59 calculates distance values corresponding to peaks based on the spectrum (voltage vs distance). FIG. 9C shows how the peaks are detected based on the spectrum (voltage vs distance) and corresponding distance values are calculated. Here, a peak is detected in each of the three channels based on the spectrum (voltage vs distance), and a distance value corresponding to the peak is calculated, as shown in FIG. 9C.

In step S34, the processing unit 59 averages the distance values calculated in step S33. Specifically, the processing unit 59 averages the distance values, which have been calculated in correspondence with the peaks detected based on the spectrum (voltage vs distance) in the three channels in step S33, and outputs the averaging result as the distance to the measurement target T.

It is preferable that in step S34, when averaging the distance values calculated in step S33, the processing unit 59 averages distance values only for peaks whose SNR is greater than or equal to a threshold. If, for example, a peak is detected in any of the three channels based on the spectrum (voltage vs distance) but the SNR is smaller than the threshold, it is determined that the distance value calculated based on this spectrum is not reliable and is therefore not used.

Next, a specific embodiment of the present disclosure will be described in detail, focusing on more characteristic configurations, functions, and properties. Note that the following optical interference range sensor corresponds to the displacement sensor 10 described with reference to FIGS. 1 to 9. Some or all of the basic configurations, functions, and properties included in the present optical interference range sensor are common to the configurations, functions, and properties included in the displacement sensor 10 described with reference to FIGS. 1 to 9.

Embodiment

Configuration of Optical Interference Range Sensor

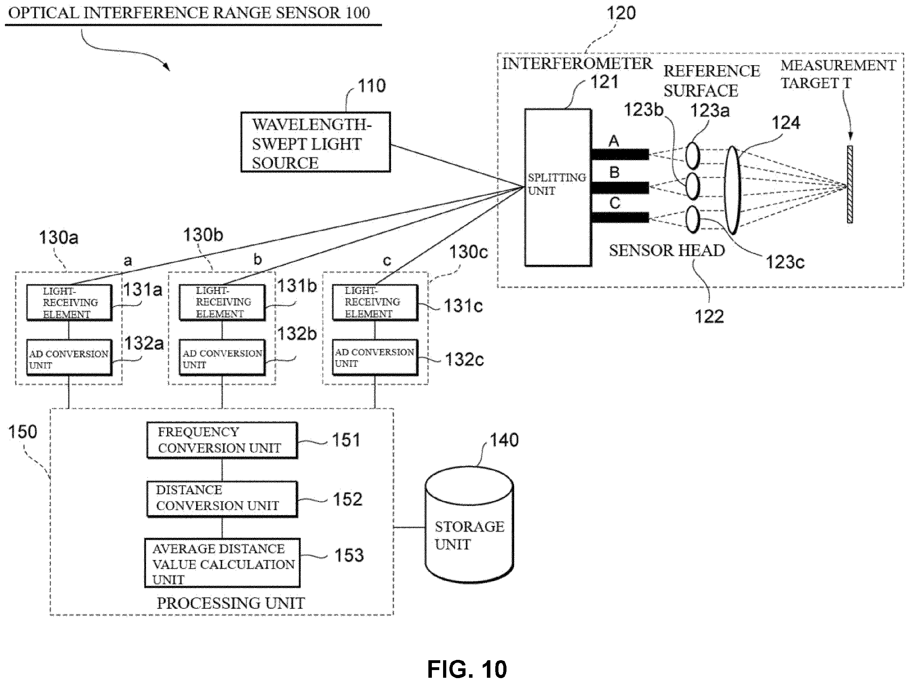

FIG. 10 is a schematic diagram showing a schematic configuration of an optical interference range sensor 100 according to an embodiment of the present invention. As shown in FIG. 10, the optical interference range sensor 100 includes a wavelength-swept light source 110, an interferometer 120, light-receiving units 130a to 130c, a storage unit 140, and a processing unit 150. Note that the light-receiving units 130a to 130c may simply be referred to as a light-receiving unit(s) 130 when they need not be distinguished. The optical interference range sensor 100 shown in FIG. 10 is configured as a multi-stage optical interference range sensor, and is configured, as an example, as an optical interference range sensor having a three-stage configuration with three interferometers. However, the number of interferometers (i.e., the number of stages) may alternatively be two, or may be four or more.

The wavelength-swept light source 110 is connected to a splitting unit 121 of the interferometer 120 and projects a light beam while continuously varying the wavelength. The wavelength-swept light source 110 uses a predetermined sweep frequency pattern when projecting a light beam. The predetermined sweep frequency pattern includes a first sweep frequency pattern and a second sweep frequency pattern. The details of the sweep frequency patterns will be described later.

The interferometer 120 includes the splitting unit 121 and a sensor head 122. The splitting unit 121 splits an input light beam into a plurality of optical paths, and the split light beams are guided to the sensor head 122 via respective optical fiber cables. The sensor head 122 includes collimating lenses 123a to 123c arranged for respective optical paths, as shown in FIGS. 6A and 6B, for example. An objective lens 124 is also attached to or included in the sensor head 122.

The splitting unit 121 splits the input light beam projected from the wavelength-swept light source 110 into beams with optical paths A to C and outputs the split light beams so as to radiate these light beams toward a plurality of (here, three) spots on the measurement target T. The splitting unit 121 may be an optical coupler or the like, for example.

The light beam that is split into the optical path A serves as a measurement beam, passes through the collimating lens 123a and the objective lens 124 via an optical fiber cable, and is radiated toward the measurement target T and reflected at the measurement target T. The reflected beam (first reflected beam) that has been reflected at the measurement target T returns to the splitting unit 121 from the leading end of the optical fiber through the objective lens 124 and the collimating lens 123a.

Also, the light beam that is split into the optical path A serves as a measurement beam and is radiated toward the measurement target T via an optical fiber cable, but a part of the light beam serves as a reference beam and is reflected at a reference surface. Here, the leading end of the optical fiber cable serves as the reference surface, and the reflected beam (second reflected beam) reflected at this reference surface returns to the splitting unit 121 via the optical fiber cable.

Here, regarding the light beams output from the splitting unit 121 to the optical fiber cable in the optical path A, the measurement beam is radiated toward the measurement target T and returns as the first reflected beam to the splitting unit 121 via this optical fiber cable, and the reference beam returns as the second reflected beam, which is reflected at the reference surface that is the leading end of the optical fiber cable, to the splitting unit 121 via this optical fiber cable. Therefore, an interference beam is generated in accordance with an optical path length difference between the measurement beam and the reference beam. In other words, the optical path length difference is the round-trip distance from the leading end of the optical fiber cable in the optical path A to the measurement target T. The interferometer 120 generates a first interference beam by interference between the first and second reflected beams, and the generated interference beam serves as a return beam to the splitting unit 121. Note that both the optical path lengths of the measurement beam and the reference beam may have values that are obtained by multiplying the spatial length of the optical path by a refractive index.

Similarly, the light beam that is split into the optical path B serves as a measurement beam, passes through the collimating lens 123b and the objective lens 124 via an optical fiber cable, and is radiated toward the measurement target T and reflected at the measurement target T. The reflected beam (first reflected beam) that has been reflected at the measurement target T returns to the splitting unit 121 from the leading end of the optical fiber through the objective lens 124 and the collimating lens 123b. A part of the light beam that is split into the optical path B serves as a reference beam and is reflected at a reference surface that is the leading end of the optical fiber cable. The reflected beam (second reflected beam) reflected at this reference surface returns to the splitting unit 121 via the optical fiber cable.

At this time, an interference beam is generated in accordance with an optical path length difference between the measurement beam and the reference beam of the light beam output from the splitting unit 121 to the optical fiber cable in the optical path B. In other words, the optical path length difference is the round-trip distance from the leading end of the optical fiber cable in the optical path B to the measurement target T. The interferometer 120 generates a second interference beam by interference between the first and second reflected beams, and the generated interference beam serves as a return beam to the split unit 121.

Similarly, the light beam that is split into the optical path C serves as a measurement beam, passes through the collimating lens 123c and the objective lens 124 via an optical fiber cable, and is radiated toward the measurement target T and reflected at the measurement target T. The reflected beam (first reflected beam) that has been reflected at the measurement target T returns to the splitting unit 121 from the leading end of the optical fiber through the objective lens 124 and the collimating lens 123c. A part of the light beam that is split into the optical path C serves as a reference beam and is reflected at a reference surface that is the leading end of the optical fiber cable. The reflected beam (second reflected beam) reflected at this reference surface returns to the splitting unit 121 via the optical fiber cable.

At this time, an interference beam is generated in accordance with an optical path length difference between the measurement beam and the reference beam of the light beam output from the splitting unit 121 to the optical fiber cable in the optical path C. In other words, the optical path length difference is the round-trip distance from the leading end of the optical fiber cable in the optical path C to the measurement target T. The interferometer 120 generates a third interference beam by interference between the first and second reflected beams, and the generated interference beam serves as a return beam to the splitting unit 121.

Thus, the input light beam projected from the wavelength-swept light source 110 is split by the splitting unit 121. In the optical paths A to C of the split beams, a first interference beam, a second interference beam, and a third interference beam are generated that depend on the optical path length differences between the measurement beams radiated toward respective spots on the measurement target T and the reference beams reflected at the reference surfaces that are the leading ends of the respective optical fiber cables in the optical paths A to C. The interferometer 120 outputs these interference beams as return beams to the light-receiving unit 130.

The light-receiving units 130a to 130c have light-receiving elements 131a to 131c and AD conversion units 132a to 132c, respectively. The light-receiving elements 131a to 131c, which are, for example, photodetectors, receive light beams output from respective branches a to c, which are output ports of the splitting unit 121, and convert the received light beams to electrical signals. The AD conversion units 132a to 132c convert these electrical signals from analog signals to digital signals.

The light-receiving units 130a to 130c correspond respectively to the optical paths A to C and receive light beams output from the respective branches a to c of the splitting unit 121.

The first interference beam generated in the optical path A is split at a predetermined split ratio by an optical coupler or the like of the splitting unit 121, and is then output. The light-receiving unit 130a receives a light beam output from the branch a of the splitting unit 121, generates a digital signal based on the received light beam, and supplies the generated digital signal to the processing unit 150.

The second interference beam generated in the optical path B is split at a predetermined split ratio by an optical coupler or the like of the splitting unit 121, and is then output. The light-receiving unit 130b receives a light beam output from the branch b of the splitting unit 121, generates a digital signal based on the received light beam, and supplies the generated digital signal to the processing unit 150.

The third interference beam generated in the optical path C is split at a predetermined split ratio by an optical coupler or the like of the splitting unit 121, and is then output. The light-receiving unit 130c receives a light beam output from the branch c of the splitting unit 121, generates a digital signal based on the received light beam, and supplies the generated digital signal to the processing unit 150.

The processing unit 150 measures the distance to the measurement target T based on the digital signals converted by the light-receiving units 130a to 130c. The processing unit 150 is, for example, a processor that includes an integrated circuit such as a CPU (Central Processing Unit), a DSP (Digital Signal Processor), an ASIC (Application Specific Integrated Circuit), a PLD (Programmable Logic Device), an FPGA (Field Programmable Gate Array), or an SoC (System-on-a-Chip).

The storage unit 140 stores distance information indicating the distance measured by the processing unit 150. Every time the processing unit 150 measures the distance, the storage unit 140 additionally stores corresponding distance information. Therefore, the storage unit 140 holds distance information indicating previously measured distances for multiple past measurements. The storage unit 140 stores program, data, and the like, and is connected to the processing unit 150 in an accessible (readable and writable) manner. The storage unit 140 is, for example, a memory that includes a ROM (Read Only Memory), an EPROM (Erasable Programmable ROM), an EEPROM (Electrically Erasable Programmable ROM), a RAM (Random Access Memory), a cache memory, and/or a buffer memory.

The processing unit 150 also includes as functional blocks a frequency conversion unit 151, a distance conversion unit 152, and an average distance value calculation unit 153.

The frequency conversion unit 151 converts an electrical signal converted by the light-receiving unit 130 to a frequency spectrum. For example, a digital signal from the AD conversion unit 132 of the light-receiving unit 130 is converted to a frequency spectrum through FFT, as shown in FIG. 9A. The distance to the measurement target T is measured based on the frequency spectrum. The electrical signal in the temporal domain thus being converted to a frequency spectrum in the frequency domain facilitates analysis of the frequency component included in the frequency spectrum.

The distance conversion unit 152 converts the frequency spectrum converted by the frequency conversion unit 151 to a distance. For example, a peak frequency in the frequency spectrum, which is a signal of frequency and voltage, is converted to a corresponding distance, as shown in FIG. 9B. The distance to the measurement target T can thus be easily measured by converting the frequency spectrum to the distance.

The average distance value calculation unit 153 calculates an average distance value based on the measured distance, and first distance information indicating a distance based on a light beam projected using the first sweep frequency pattern, and second distance information indicating a distance based on a light beam projected using the second sweep frequency pattern, of the past distance information regarding multiple measurements stored in the storage unit 140. The average distance value is a value calculated by using at least three distances, namely the measured distance, the distance indicated by the first distance information, and the distance indicated by the second distance information. Note that the details of the distance indicated by the first distance information and the distance indicated by the second distance information will be described later.

Specifically, the average distance value calculation unit 153 calculates an average distance value based on a first average value of the measured distance and the distance indicated by the first distance information stored in the storage unit 140, and a second average value of the distance indicated by the first distance information and the distance indicated by the second distance information stored in the storage unit 140. In this case, the average distance value is calculated by averaging at least four distances, namely the measured distance, the distance indicated by the first distance information, the distance indicated by the first distance information, and the distance indicated by the second distance information.

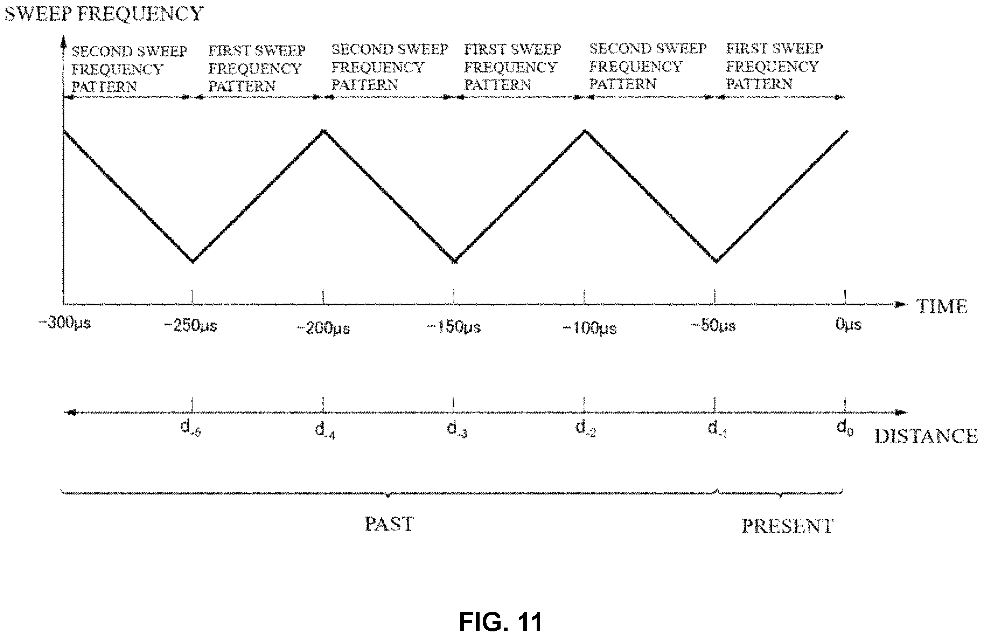

FIG. 11 is a diagram for illustrating the relationship between the sweep frequency and the measured distance. As mentioned above, the wavelength-swept light source 110 projects a light beam while continuously varying the wavelength using the predetermined sweep frequency pattern. In other words, the wavelength-swept light source 110 projects a light beam while continuously varying the frequency using the predetermined sweep frequency pattern. The interferometer 120 generates an interference beam that depends on the optical path length difference between a measurement beam radiated toward the measurement target T and reflected thereat and a reference beam reflected at a reference surface at a leading end of an optical fiber cable. The light-receiving unit 130 converts this interference beam to an electrical signal. The processing unit 150 calculates the distance to the measurement target T based on this electrical signal.

The frequency continuously varied by the wavelength-swept light source 110 is generally called "sweep frequency". A periodic pattern (waveform) of the sweep frequency when varied over time is called a "sweep frequency pattern". As shown in FIG. 11, the wavelength-swept light source 110 projects a light beam using a first sweep frequency pattern and a second sweep frequency pattern.

The first sweep frequency pattern is a pattern that increases the sweep frequency over time, for example. Meanwhile, the second sweep frequency pattern is a pattern that decreases the sweep frequency over time, for example. Accordingly, the first sweep frequency pattern is an up-chirp signal, the second sweep frequency pattern is a down-chirp signal, and the sweep frequency signal in the wavelength-swept light source 110 is a chirp signal (which is also called a "sweep signal"). This enables the interferometer 120 to easily generate an interference beam corresponding to the optical path length difference between the measurement beam and the reference beam.

The periods of the first sweep frequency pattern and the second sweep frequency pattern are both 50 $\mu$s. The wavelength-swept light source 110 alternately uses the first sweep frequency pattern and the second sweep frequency pattern. This can alternatively make long and short the swept wavelength of the light beam projected from the wavelength-swept light source 110.

In the period from -50 $\mu$s to 0 $\mu$s, the wavelength-swept light source 110 projects a light beam using the first sweep frequency pattern that continuously increases the sweep frequency (wavelength). The interferometer 120 generates an interference beam from this light beam, and the light-receiving unit 130 receives the generated interference beam and converts the received beam to an electrical signal. The processing unit 150 measures a distance $d_0$ to the measurement target T based on the electrical signal at the point 0 $\mu$s or immediately after the point 0 $\mu$s on the time axis. That is, the distance $d_0$ is measured based on the light beam in the first sweep frequency pattern. Distance information indicating the measured distance $d_0$ is added to and stored in the storage unit 140. The distance $d_0$ indicates the current distance measured at the point 0 $\mu$s on the time axis, i.e., at the current point in time.

In the period from -100$\mu$s to -50$\mu$s, the wavelength-swept light source 110 projects a light beam using the second sweep frequency pattern that continuously decreases the sweep frequency (wavelength). The interferometer 120 generates an interference beam from this light beam, and the light-receiving unit 130 receives the generated interference beam and converts the received beam to an electrical signal. The processing unit 150 measures a distance $d_{-1}$ to the measurement target T based on the electrical signal at the point -50 $\mu$s or immediately after the point - 50 $\mu$s on the time axis. That is, the distance $d_{-1}$ is measured based on the light beam in the second sweep frequency pattern. Information indicating the measured distance $d_{-1}$ is added to and stored in the storage unit 140. The information indicating the distance $d_{-1}$ is one example of the aforementioned first distance information.

In the period from -150 $\mu$s to -100 $\mu$s, the wavelength-swept light source 110 projects a light beam using the first sweep frequency pattern that continuously increases the sweep frequency (wavelength). The interferometer 120 generates an interference beam from this light beam, and the light-receiving unit 130 receives the generated interference beam and converts the received beam to an electrical signal. The processing unit 150 measures a distance $d_{-2}$ to the measurement target T based on the electrical signal at the point -100 $\mu$s or immediately after the point - 100 $\mu$s on the time axis. That is, the distance $d_{-2}$ is measured based on the light beam in the first sweep frequency pattern. Distance information indicating the measured distance $d_{-2}$ is added to and stored in the storage unit 140. The distance information indicating the distance $d_{-2}$ is one example of the aforementioned second distance information.

Thus, the first distance information indicates the past distance $d_{-1}$ once before the current measured distance, and the second distance information indicates the past distance $d_{-2}$ twice before the current measured distance. This enables the average distance value to be easily calculated based on the distances $d_0$, $d_{-1}$, and $d_{-2}$ obtained in the recent three measurements, including the current distance $d_0$ (at the current point in time).

Similarly, a distance $d_{-3}$ based on the light beam in the second sweep frequency pattern is measured at the point -150 $\mu$s or immediately after the point - 150 $\mu$s on the time axis. A distance $d_{-4}$ based on the light beam in the first sweep frequency pattern is measured at the point -200 $\mu$s or immediately after the point - 200 $\mu$s on the time axis. A distance $d_{-5}$ based on the light beam in the second sweep frequency pattern is measured at the point -250 $\mu$s or immediately after the point - 250 $\mu$s on the time axis. Distance information indicating the measured distances $d_{-2}$ to $d_{-5}$ is added to and stored in the storage unit 140. Note that the distance information indicating the distance $d_{-1}$ is another example of the aforementioned first distance information. The distance information indicating the distance $d_{-3}$ and the distance information indicating the distance $d_{-5}$ are other examples of the aforementioned second distance information.

The distance $d_0$ is stored as information indicating the current distance (at the current point in time) and readable at the point 0 μs on the time axis. The distances $d_{-1}$ to $d_{-5}$ are stored as information indicating past distances obtained in multiple measurements and are readable at the point 0 μs on the time axis.

Note that FIG. 11 shows an example where information indicating the past distances obtained in five measurements as past distances is stored, but this need not be the case. The past distances need only be those obtained in two or more measurements, and may alternatively be past distances obtained in six or more measurements.

Next, the following is a description of the average distance value calculated by the average distance value calculation unit 153 of the processing unit 150 when the distance to the measurement target T is changing with acceleration. The following description takes an example where the measurement target T is a vibrating object that vibrates at a predetermined frequency of, e.g., 120 Hz.

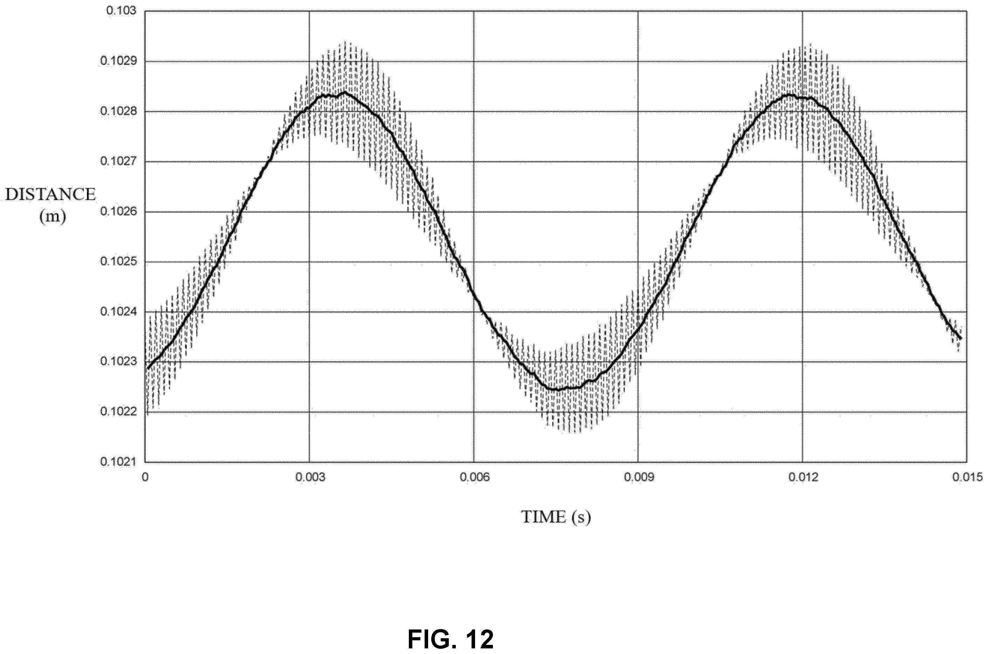

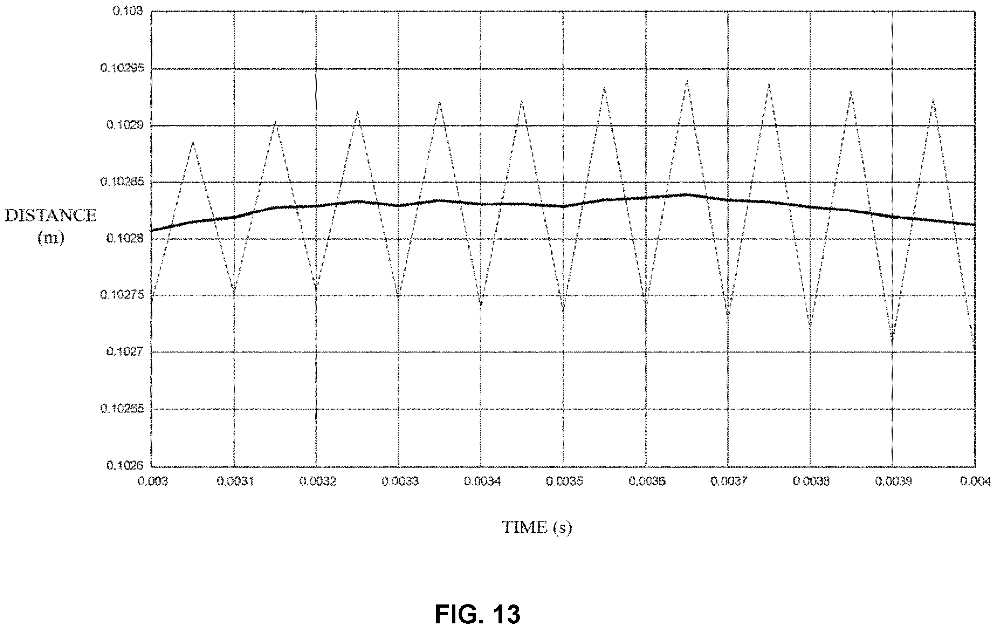

FIG. 12 is a graph showing an example of the average distance value calculated for the measurement target T by the average distance value calculation unit 153. FIG. 13 is a graph that enlarges a partial range of the graph shown in FIG. 12. In FIGS. 12 and 13, the average distance value obtained with the optical interference range sensor 100 of this embodiment is indicated by a thick line, and an average distance value calculated in a hypothetical optical interference range sensor is indicated as a reference example by a broken line. Note that the hypothetical optical interference range sensor is imagined for comparison with the optical interference range sensor 100 of the present embodiment, and has substantially the same configuration as the optical interference range sensor 100 except that the average distance value is calculated based on the current distance and the past distance once before the current distance.

When the distance to the measurement target T changes with acceleration, if the average distance value that is an average of the current distance and the distance once before the current distance is calculated as the hypothetical optical interference range sensor does, the distance significantly fluctuates over time despite averaging, as indicated by the broken lines in FIGS. 12 and 13, and a shifting (fluctuation) component exists.

This phenomenon can be explained as follows. That is, the current distance $d_0$ calculated at the point 0 μs on the time axis is expressed by the following equation (1).

$$d_0 = d - w * (v_0 + a * (0 * \Delta t)) \dots (1)$$

Here, the variables are as follows.

d: The distance to the measurement target T at the time 0 on the time axis;
$\Delta d$: The distance that varies during a period $\Delta t$:
w: Doppler constant [s];
$v_0$: The velocity at the time 0 on the time axis;
a: Acceleration

The past distance $d_{-1}$ once before the current distance is expressed by the following equation (2), using the same variables.

$$d_{-1} = d - \Delta d + w * (v_0 + a * (1 * \Delta t)) \dots (2)$$

Note that the past distance $d_{-1}$ once before the current distance originally includes the term $(\Delta t)^2$. However, this term takes a very small, negligible value, and is therefore omitted in the equation (2).

As a result, the average distance value $d_{av}'$ calculated by the hypothetical optical interference range sensor can be expressed by the following equation (3), using the equations (1) and (2).

$$d_{av}' = d - \Delta d / 2 + w * a * \Delta t / 2 \dots (3)$$

The term $w * a * \Delta t / 2$ in the equation (3) can be considered to correspond to the shifting (fluctuation) component in FIGS. 12 and 13. This is not limited to the case where the average distance value $d_{av}'$ of the hypothetical optical interference range sensor is an average of the current distance $d_0$ and the past distance $d_{-1}$ once before the current distance. A term corresponding to the aforementioned shifting (fluctuation) component also exists in the average distance value calculated by the hypothetical optical interference range sensor when the average distance value is an average of the past distance $d_{-1}$ once before the current distance and the past distance $d_{-2}$ twice before the current distance, and when the average distance value is an average of a past distance $d_{-j}$ that is j times (j is an integer of 2 or more) before the current distance and a past distance $d_{-(j+1)}$ that is (j+1) times before the current distance.

In contrast, in the optical interference range sensor 100 of the present embodiment, the average distance value calculation unit 153 of the processing unit 150 calculates the above-described average distance value. Specifically, the average distance value calculation unit 153 calculates the average distance value $d_{av}$ based on a first average value $d_{av1}$ of the measured current distance $d_0$ and the distance indicated by the first distance information, and a second average value $d_{av2}$ of the distance indicated by the first distance information and the distance indicated by the second distance information. The distance indicated by the first distance information is the past distance $d_{-1}$ once before the current distance, and the distance indicated by the second distance information is the past distance $d_{-2}$ twice before the current distance.

The first average value $d_{av1}$ of the current distance $d_0$ and the past distance $d_{-1}$ once before the current distance is expressed by the following equation (4).

$$d_{av1} = (d_0 + d_{-1}) / 2 \ ... \ (4)$$

The second average value $d_{av2}$ of the past distance $d_{-1}$ once before the current distance and the past distance $d_{-2}$ twice before the current distance is expressed by the following equation (5).

$$d_{av2} = (d_{-1} + d_{-2}) / 2 \ ... \ (5)$$

The average distance value $d_{av}$ calculated by the average distance value calculation unit 153 is expressed by the following equation (6), using the equations (4) and (5).

$$d_{av} = (d_{av1} + d_{av2}) / 2 = (d_0 + 2 * d_{-1} + d_{-2}) / 4 \ ... \ (6)$$

Here, the past distance $d_{-2}$ twice before the current distance is expressed by the following equation (7), using the same variables as the above-described variables.

$$d_{-2} = d - 2 * \Delta d - w * (v_0 + a * (2 * \Delta t)) \ ... \ (7)$$

Accordingly, the average distance value $d_{av}$ calculated by the average distance value calculation unit 153 is expressed by the following equation (8), using the equations (6), (1), (2), and (7).

$$d_{av} = d - \Delta d \ ... \ (8)$$

As is clear from the equation (8), the average distance value $d_{av}$ does not include a term corresponding to the shifting (fluctuation) component that exists in the average distance value $d_{av}'$ of the hypothetical optical interference range sensor. As a result, fluctuations occurring over time can be reduced in the distance corresponding to the average distance value $d_{av}$ compared to the hypothetical optical interference range sensor, as indicated by the thick lines in FIGS. 12 and 13.

As described above, the average distance value is calculated based on the measured distance, the first distance information indicating the distance based on a light beam projected using the first sweep frequency pattern, and the second distance information indicating the distance based on a light beam projected using the second sweep frequency pattern, of the past distance information regarding multiple measurements stored in the storage unit 140. This can reduce shifts (fluctuation) dependent on the acceleration that have occurred in the conventional method in the case where, for example, the distance to the measurement target T, such as a vibrating object, changes with acceleration. Accordingly, using this average distance value enables highly accurate measurement of the distance to the measurement target T that changes with acceleration.

The present invention is based on calculating the average distance value based on the measured distance $d_0$ and two past distances, namely the distance indicated by the first distance information and the distance indicated by the second distance information, as described above. However, the description presents, in the following, other examples, which are not covered by the appended claims. If a speedup is not necessary, the average distance value calculation unit 153 may alternatively calculate the average distance value also based on at least one piece of third distance information different from the first and second distance information, of the past distance information regarding multiple measurements stored in the storage unit 140.

In this case, the average distance value $d_{av}$ is calculated using the following equation (9), for example.

$$d_{av} = (d_0 + d_{-1} + d_{-3} + d_{-4}) / 4 \ldots (9)$$

Thus, the average distance value calculation unit 153 calculates the average distance value based on the measured distance $d_0$, the first distance information, the second distance information, and at least one piece of third distance information different from the first and second distance information, of the past distance information regarding multiple measurements stored in the storage unit. This can reduce shifts (fluctuation) dependent on the acceleration.

Further, the average distance value $d_{av}$ is calculated based on the first average value $d_{av1}$ of the measured distance $d_0$ and the distance indicated by the first distance information, and the second average value $d_{av2}$ of the distance indicated by the first distance information and the distance indicated by the second distance information. With this, the average distance value $d_{av}$ from which shifts (fluctuation) dependent on the acceleration have been reduced can be calculated more easily when the first and second sweep frequency patterns are alternately used.

Note that the distance indicated by the first distance information and the distance indicated by the second distance information are limited to being the past distance $d_{-1}$ once before the current distance and the past distance $d_{-2}$ twice before the current distance, respectively, within the scope of the appended claims. Other examples, which do not fall under the scope of the claims, are presented in the following. The average distance value $d_{av}$ calculated by the average distance value calculation unit 153 can be expressed as a superordinate concept by the following equation (10), using the above equation (6) and a positive integer k (k = 1, 2, 3, ... ).

$$d_{av} = (d_0 + 2 * d_{-(2k-1)} + d_{-2(2k-1)}) / 4 \ldots (10)$$

Furthermore, the average distance value $d_{av}$ can be generalized as follows. That is, when the distance to the measurement target T changes with acceleration as mentioned above, the measured distance d includes terms of a Doppler constant w both at the present and in the past. Here, with attention given to terms D of the Doppler constant w, terms $D_0$ to $D_{-3}$ of the Doppler constant w that are included respectively in the distances $d_0$ to $d_{-3}$ are expressed by the following equations (11) to (14), respectively, with $w * v_0$ denoting a constant $\alpha$ and $w * a * \Delta t$ denoting a constant $\beta$.

$$D_0 = -(\alpha + 0*\beta) \ldots (11)$$

$$D_{-1} = +(\alpha + 1 *\beta) \ldots (12)$$

$$D_{-2} = -(\alpha + 2 *\beta) \ldots (13)$$

$$D_{-3} = +(\alpha + 3 *\beta) \ldots (14)$$

If these equations (11) to (14) are generalized using a natural number m that includes 0, the term $D_m$ of the Doppler constant w is expressed by the following equation (15).

$$D_{-m} = (-1)^{-m}(m\beta - \alpha) \ldots (15)$$

If the averaging for calculating the average distance value $d_{av}$ using the past distances eliminates the term $D_m$ of the Doppler constant w, it is considered that the term of the Doppler constant w is not left in the average distance value $d_{av}$ as in the above equation (8). Accordingly, a combination of natural numbers m that satisfies the following equation (16) is obtained using the term $D_m$ of the Doppler constant w.

$$D_{-s} + D_{-t} + D_{-u} + \ldots = 0 \ldots (16)$$

Here, the variables are as follows.

s, t, u: Members of m

In a specific example, in the case of a combination of a term $D_{-0}$ of the Doppler constant w in the current distance $d_0$, a term $D_{-1}$ of the Doppler constant w in the past distance $d_{-1}$ once before the current distance, the term $D_{-1}$ of the Doppler constant w in the past distance $d_{-1}$ once before the current distance, and a term $D_{-2}$ of the Doppler constant w in the past distance $d_{-2}$ twice before the current distance, the sum of these terms, i.e., $(D_{-0} + D_{-1} + D_{-1} + D_{-2})$ satisfies the above equation (16). Further, in the case of a combination of the term $D_{-0}$ of the Doppler constant w in the current distance $d_0$, the term $D_{-1}$ of the Doppler constant w in the past distance $d_{-1}$ once before the current distance, a term $D_{-3}$ of the Doppler

constant w in the past distance $d_{-3}$ three times before the current distance, and a term $D_{-4}$ of the Doppler constant w in the past distance $d_{-4}$ four times before the current distance, the sum of these terms, i.e., $(D_{-0} + D_{-1} + D_{-3} + D_{-4})$ also satisfies the above equation (16).

The average distance value $d_{av}$ from which shifts (fluctuation) dependent on the acceleration have been reduced may be calculated by thus eliminating the influence of the Doppler constant w.

This example has described an example of calculating the average distance value $d_{av}$ by means of arithmetical mean to simplify the description, but this need not be the case. The average distance value $d_{av}$ may alternatively be calculated by means of an averaging method other than arithmetical mean, or the calculation thereof may also include subtraction, whereby these alternatives do not fall under the scope of the claims.

For example, the average distance value $d_{av}$ can be calculated by means of root-mean-square. Specifically, the root-mean-square of the measured current distance $d_0$ and the past distance $d_{-1}$ once before the current distance, as well as the past distance $d_{-1}$ once before the current distance and the past distance $d_{-2}$ twice before the current distance is expressed by the following equation (17), using the aforementioned constants $\alpha$ and $\beta$.

$$d_0{}^2 + 2d_{-1}{}^2 + d_{-2}{}^2 = 4\ (d^2 \cdot 2\Delta d * d + \Delta d^2) + 2\Delta d^2 + 4\Delta d * \beta + 4\alpha^2 + 8\alpha * \beta + 6\beta^2 \ ... \ (17)$$

In equation (17), the terms in the latter half, i.e., the terms $\Delta d^2$, $\Delta d * \beta$, $\alpha^2$, $\alpha * \beta$, and $\beta^2$ take values sufficiently smaller than the term $d^2$, and are therefore considered to be negligible. Accordingly, the above equation (17) can be approximated to the following equation (18).

$$d_0{}^2 + 2d_{-1}{}^2 + d_{-2}{}^2 \approx 4\ (d^2 \cdot 2\Delta d * d + \Delta d^2) \ ... \ (18)$$

Accordingly, the average distance value $d_{av}$ obtained by means of root-mean-square is expressed by the following equation (19).

$$d_{av} = \{(d_0{}^2 + 2d_{-1}{}^2 + d_{-2}{}^2) / 4\}^{1/2} = (d^2 \cdot 2\Delta d * d + \Delta d^2)^{1/2} = d - \Delta d \ ... \ (19)$$

Thus, in the case of calculation by means of root-mean-square as well, the average distance value $d_{av}$ does not include the constants $\alpha$ and $\beta$, which are terms of the Doppler constant, and can therefore reduce shifts (fluctuation) dependent on the acceleration.

Also, in another example not covered by the claims, the average distance value $d_{av}$ can alternatively be calculated using an equation that includes subtraction. Specifically, the following equation (20) is provided using the measured current distance $d_0$, the past distance $d_{-1}$ once before the current distance, and the past distance $d_{-3}$ three times before the current distance.

$$2d_0 + 3d_{-1} - d_{-3} = 4d \ ... \ (20)$$

In this case, the average distance value $d_{av}$ is expressed by the following equation (21).

$$d_{av} = (2d_0 + 3d_{-1} - d_{-3}) / 4 = d \ ... \ (21)$$

Thus, in the case of providing an equation that includes subtraction for calculation as well, the average distance value $d_{av}$ does not include the constants $\alpha$ and $\beta$, which are terms of the Doppler constant, and can therefore reduce shifts (fluctuation) dependent on the acceleration.

As described above, with the optical interference range sensor 100 according to the present invention, the average distance value is calculated based on the measured distance, the first distance information indicating a distance based on a light beam projected using the first sweep frequency pattern, and the second distance information indicating a distance based on a light beam projected using the second sweep frequency pattern, of the past distance information regarding multiple measurements stored in the storage unit 140. This can reduce shifts (fluctuation) dependent on the acceleration that have occurred in the conventional method in the case where, for example, the distance to the measurement target T, such as a vibrating object, changes with acceleration. Accordingly, using this average distance value enables highly accurate measurement of the distance to the measurement target T that changes with acceleration.

In the present invention, the predetermined sweep frequency pattern includes the first sweep frequency pattern and the second sweep frequency pattern, however other examples, not falling under the scope of the claims, are possible. The predetermined sweep frequency pattern may also include only one of the first and second sweep frequency patterns, or may include a sweep frequency pattern other than the first and second sweep frequency patterns.

The wavelength-swept light source 110 is not limited to alternately using the first and second sweep frequency patterns. The predetermined sweep frequency pattern may also include, for example, an up-chirp signal, another up-chirp signal, a down-chirp signal, and another down-chirp signal, and the wavelength-swept light source 110 may use these four signals in the aforementioned order.

Variation of Interferometer

The optical interference range sensor 100 in the above embodiment uses a Fizeau interferometer that generates a reference beam by using the leading end of the optical fiber cable as a reference surface in the interferometer 120. However, the interferometer is not limited thereto.

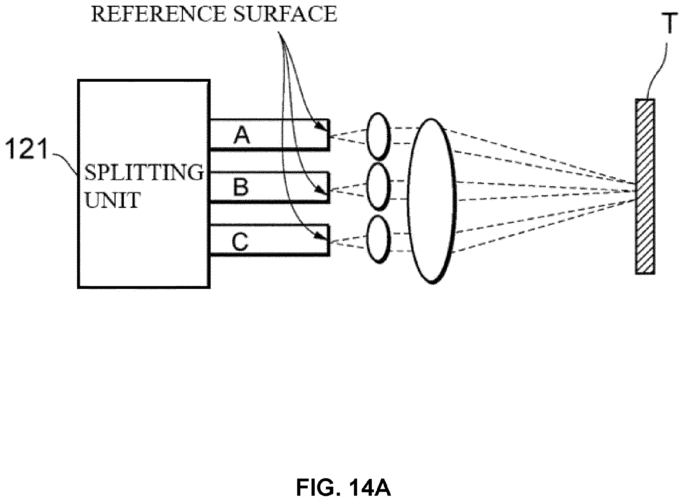

FIGS. 14A to 14C show variations of interferometers that generate an interference beam using a measurement beam and a reference beam. In FIG. 14A, interference beams are generated based on the optical path length differences between the reference beams reflected at the reference surfaces that are the leading ends of the respective optical fiber cables in the optical paths A to C split by the splitting unit 121 and the measurement beam radiated from the sensor head and reflected at the measurement target T. This is the configuration of the interferometer 120 (Fizeau interferometer) of the optical interference range sensor 100 according to the above embodiment. The reference surface may alternatively be configured so that a light beam is reflected due to a difference in refractive index between the optical fiber cable and the air (Fresnel reflection). In addition, the leading end of each optical fiber may also be coated with a reflective film. Alternatively, a configuration may also be employed in which a non-reflective coating is applied to the leading end of each optical fiber, and a reflective surface, such as a lens surface, is arranged separately.

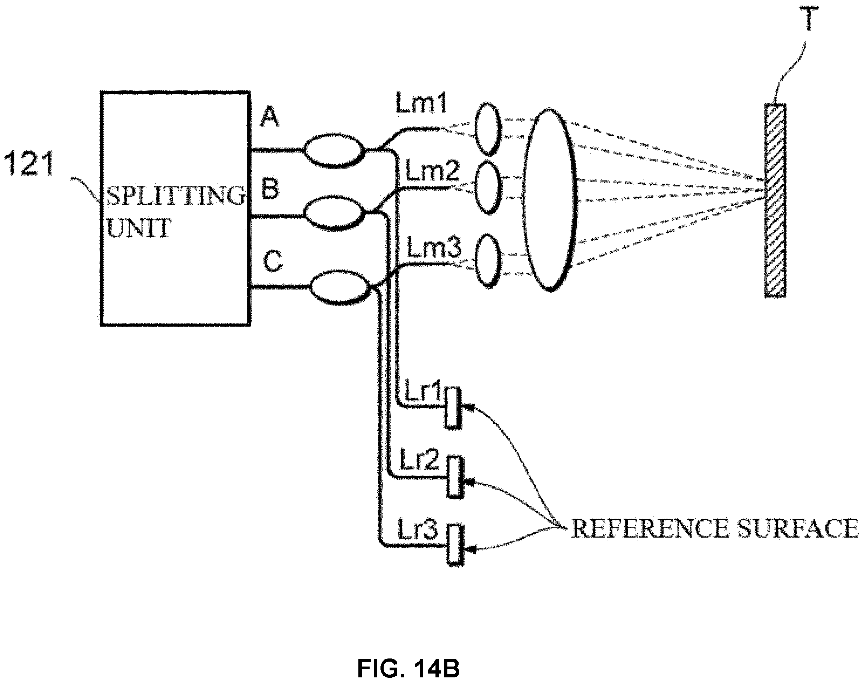

In FIG. 14B, measurement optical paths Lm1 to Lm3 for guiding measurement beams to the measurement target T and reference optical paths Lr1 to Lr3 for guiding reference beams are formed in the optical paths A to C split by the splitting unit 121. Reference surfaces are arranged at leading ends of the reference optical paths Lr1 to Lr3 (Michelson interferometer). The reference surfaces may be obtained by coating the leading ends of the optical fiber cables with reflective films, or may be obtained by applying non-reflective coating to the leading ends of the optical fibers and separately arranging mirrors or the like. In this configuration, interference beams are generated in the optical paths A to C by providing optical path length differences between the optical path lengths of the measurement optical paths Lm1 to Lm3 and the optical path lengths of the reference optical paths Lr1 to Lr3. Optical design in the sensor head can be simplified since the optical path lengths of the measurement optical paths Lm1 to Lm3 can be adjusted.

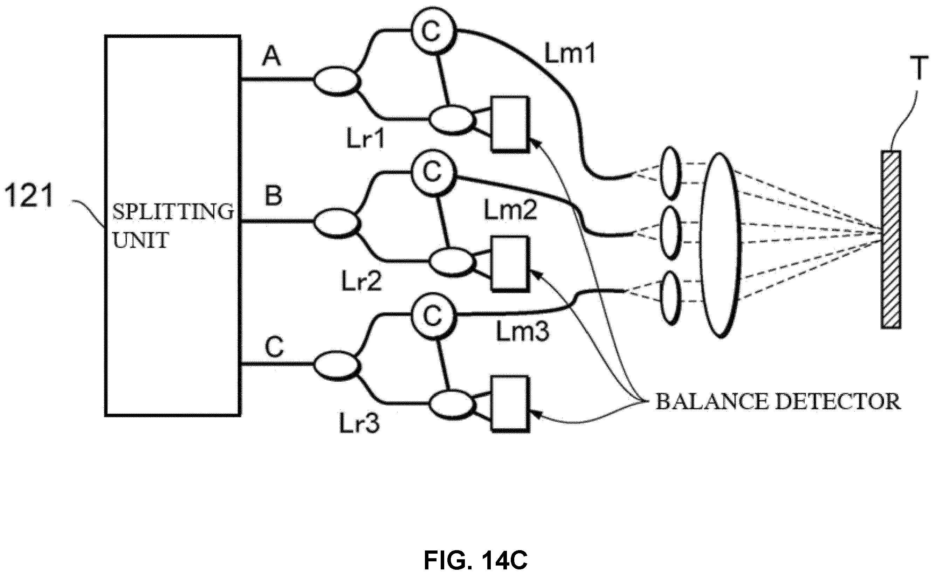

In FIG. 14C, measurement optical paths Lm1 to Lm3 for guiding measurement beams to the measurement target T and reference optical paths Lr1 to Lr3 for guiding reference beams are formed in the optical paths A to C split by the splitting unit 121. Balance detectors are arranged in the reference optical paths Lr1 to Lr3 (Mach-Zehnder interferometer). In this configuration, interference beams are generated in the optical paths A to C by providing optical path length differences between the optical path lengths of the measurement optical paths Lm1 to Lm3 and the optical path lengths of the reference optical paths Lr1 to Lr3. Optical design in the sensor head can be simplified since the optical path lengths of the measurement optical paths Lm1 to Lm3 can be adjusted.

Thus, the interferometer is not limited to the Fizeau interferometer described in the embodiment above, and may be, for example, a Michelson interferometer or a Mach-Zehnder interferometer. Any type of interferometer may be applied, or a combination of those interferometers or any other configuration may be applied if an interference beam can be generated by setting the optical path length difference between a measurement beam and a reference beam.

Note that the above-described examples are for facilitating understanding the present invention, and are not for interpreting the present invention in a limiting manner. The invention is defined by the appended claims.

LIST OF REFERENCE NUMERALS

1 Sensor system
10 Displacement sensor
11 Control device
12 Control signal input sensor
13 Externally connected device
20 Sensor head
21 Objective lens
22a, 22b, 22c Collimating lens

23 Lens holder
24 Optical fiber array
30 Controller
31 Display unit
32 Setting unit
33 External I/F unit
34 Optical fiber cable connector
35 External storage unit
36 Measurement processing unit
40 Optical fiber cable
51 Wavelength-swept light source
52 Optical amplifier
53, 53a, 53b Isolator
54, 54a, 54b, 54c, 54d, 54e, 54f, 54g, 54h, 54i, 54j Optical coupler
55 Attenuator
56a, 56b, 56c Light-receiving element
57a, 57b, 57c Amplifier circuit
58a, 58b, 58c AD conversion unit
59 Processing unit
60 Balance detector
61 Correction signal generation unit
71a, 71b, 71c, 71d, 71e Light-receiving element
72a, 72b, 72c Amplifier circuit
74a, 74b, 74c AD conversion unit
75 Processing unit
76 Differential amplifier circuit
77 Correction signal generation unit
100 Optical interference range sensor
110 Wavelength-swept light source
120 Interferometer
121 Splitting unit
122 Sensor head
123a, 123b, 123c Collimating lens
124 Objective lens
130, 130a, 130b, 130c Light-receiving unit
131a, 131b, 131c Light-receiving element
132a, 132b, 132c AD conversion unit
140 Storage unit
150 Processing unit
151 Frequency conversion unit
152 Distance conversion unit
153 Average distance value calculation unit
T Measurement target
vs Voltage

**Claims**

1. An optical interference range sensor (100) comprising:

a light source (51, 110) configured to project a light beam while continuously varying its wavelength using a predetermined sweep frequency pattern;
an interferometer (120) to which the light beam projected from the light source (51, 110) is supplied, the interferometer (120) being configured to generate an interference beam by interference between a measurement beam that is a light beam radiated by a sensor head (20, 122) toward a measurement target (T) and reflected therefrom and a reference beam passing through an optical path that is at least partially different from an optical path of the measurement beam;
a light-receiving unit (130, 130a, 130b, 130c) configured to receive the interference beam from the interferometer (120) and convert the received interference beam into an electrical signal;
a processing unit (59, 75, 150) configured to measure a distance to the measurement target (T) based on the electrical signal converted by the light-receiving unit (130, 130a, 130b, 130c); and
a storage unit (140) configured to store distance information indicating the measured distance,
wherein the predetermined sweep frequency pattern includes a first sweep frequency pattern and a second sweep frequency pattern,
wherein the processing unit (59, 75, 150) includes an average distance value calculation unit (153) configured to calculate an average distance value based on:

the measured distance,
first distance information indicating a distance based on a light beam projected using the first sweep frequency pattern, and
second distance information indicating a distance based on a light beam projected using the second sweep frequency pattern,

wherein the first and second distance information is past distance information regarding multiple measurements stored in the storage unit (140),
wherein the first distance information indicates a past distance once before the measured distance, and the second distance information indicates a past distance twice before the measured distance, and
wherein the average distance value calculation unit (153) calculates the average distance value based on a first average value of the measured distance and the distance indicated by the first distance information, and a second average value of the distance indicated by the first distance information and the distance indicated by the second distance information.

2. The optical interference range sensor (100) according to claim 1,
wherein the first sweep frequency pattern is a pattern that increases a sweep frequency over time, and the second sweep frequency pattern is a pattern that decreases the sweep frequency over time.

3. The optical interference range sensor (100) according to any one of claims 1 to 2,
wherein the light source (51, 110) alternately uses the first sweep frequency pattern and the second sweep frequency pattern.

4. The optical interference range sensor (100) according to any one of claims 1 to 3,

wherein the processing unit (59, 75, 150) further includes a frequency conversion unit (151) configured to convert the electrical signal converted by the light-receiving unit (130, 130a, 130b, 130c) to a frequency spectrum, and the distance to the measurement target (T) is measured based on the frequency spectrum.

5. The optical interference range sensor (100) according to claim 4,
wherein the processing unit (59, 75, 150) further includes a distance conversion unit (152) configured to convert the frequency spectrum converted by the frequency conversion unit (151) to the distance to the measurement target (T).

**Patentansprüche**

1. Optischer Interferenz-Entfernungssensor (100), aufweisend:

eine Lichtquelle (51, 110), die eingerichtet ist, einen Lichtstrahl zu projizieren, während ihre Wellenlänge unter Verwendung eines vorbestimmten Sweep-Frequenzmusters kontinuierlich variiert wird;
ein Interferometer (120), dem der von der Lichtquelle (51, 110) projizierte Lichtstrahl zugeführt wird, wobei das Interferometer (120) eingerichtet ist, einen Interferenzstrahl durch Interferenz zwischen einem Messstrahl, der ein Lichtstrahl ist, der von einem Sensorkopf (20, 122) auf ein Messziel (T) abgestrahlt und von diesem reflektiert wird, und einem Referenzstrahl zu erzeugen, der durch einen optischen Pfad verläuft, der sich zumindest teilweise von einem optischen Pfad des Messstrahls unterscheidet;
eine Lichtempfangseinheit (130, 130a, 130b, 130c), die eingerichtet ist, den Interferenzstrahl von dem Interferometer (120) zu empfangen und den empfangenen Interferenzstrahl in ein elektrisches Signal umzuwandeln;
eine Verarbeitungseinheit (59, 75, 150), die eingerichtet ist, eine Entfernung zu dem Messziel (T) basierend auf dem von der Lichtempfangseinheit (130, 130a, 130b, 130c) umgewandelten elektrischen Signal zu messen; und

eine Speichereinheit (140), die eingerichtet ist, Entfernungsinformationen zu speichern, die die gemessene Entfernung angeben,

wobei das vorbestimmte Sweep-Frequenzmuster ein erstes Sweep-Frequenzmuster und ein zweites Sweep-Frequenzmuster umfasst,

wobei die Verarbeitungseinheit (59, 75, 150) eine Durchschnittsentfernungswertberechnungseinheit (153) umfasst, die eingerichtet ist, einen Durchschnittsentfernungswert basierend auf Folgendem zu berechnen:

der gemessenen Entfernung,

ersten Entfernungsinformationen, die eine Entfernung basierend auf einem Lichtstrahl angeben, der unter Verwendung des ersten Sweep-Frequenzmusters projiziert wird, und

zweiten Entfernungsinformationen, die eine Entfernung basierend auf einem Lichtstrahl angeben, der unter Verwendung des zweiten Sweep-Frequenzmusters projiziert wird,

wobei die ersten und zweiten Entfernungsinformationen vergangene Entfernungsinformationen bezüglich mehrerer Messungen sind, die in der Speichereinheit (140) gespeichert sind,

wobei die ersten Entfernungsinformationen eine vergangene Entfernung einmal vor der gemessenen Entfernung angeben und die zweiten Entfernungsinformationen eine vergangene Entfernung zweimal vor der gemessenen Entfernung angeben, und

wobei die Durchschnittsentfernungswertberechnungseinheit (153) den Durchschnittsentfernungswert basierend auf einem ersten Durchschnittswert der gemessenen Entfernung und der durch die ersten Entfernungsinformationen angegebenen Entfernung und einem zweiten Durchschnittswert der durch die ersten Entfernungsinformationen angegebenen Entfernung und der durch die zweiten Entfernungsinformationen angegebenen Entfernung berechnet.

2. Optischer Interferenz-Entfernungssensor (100) nach Anspruch 1,
wobei das erste Sweep-Frequenzmuster ein Muster ist, das eine Sweep-Frequenz im Laufe der Zeit erhöht, und das zweite Sweep-Frequenzmuster ein Muster ist, das die Sweep-Frequenz im Laufe der Zeit verringert.

3. Optischer Interferenz-Entfernungssensor (100) nach einem der Ansprüche 1 bis 2,
wobei die Lichtquelle (51, 110) abwechselnd das erste Sweep-Frequenzmuster und das zweite Sweep-Frequenzmuster verwendet.

4. Optischer Interferenz-Entfernungssensor (100) nach einem der Ansprüche 1 bis 3,

wobei die Verarbeitungseinheit (59, 75, 150) ferner eine Frequenzumwandlungseinheit (151) umfasst, die eingerichtet ist, das von der Lichtempfangseinheit (130, 130a, 130b, 130c) umgewandelte elektrische Signal in ein Frequenzspektrum umzuwandeln, und

die Entfernung zu dem Messziel (T) basierend auf dem Frequenzspektrum gemessen wird.

5. Optischer Interferenz-Entfernungssensor (100) nach Anspruch 4,
wobei die Verarbeitungseinheit (59, 75, 150) ferner eine Entfernungsumwandlungseinheit (152) umfasst, die eingerichtet ist, das von der Frequenzumwandlungseinheit (151) umgewandelte Frequenzspektrum in die Entfernung zu dem Messziel (T) umzuwandeln.

**Revendications**

1. Capteur de plage d'interférence optique (100) comprenant :

une source de lumière (51, 110) configurée pour projeter un faisceau de lumière tout en faisant varier en continu sa longueur d'onde en utilisant un motif de fréquence de balayage prédéterminé ;
un interféromètre (120) auquel le faisceau de lumière projeté à partir de la source de lumière (51, 110) est fourni, l'interféromètre (120) étant configuré pour générer un faisceau d'interférence par interférence entre un faisceau de mesure qui est un faisceau de lumière rayonné par une tête de capteur (20, 122) vers une cible de mesure (T) et réfléchi à partir de celle-ci et un faisceau de référence passant à travers un trajet optique qui est au moins partiellement différent d'un trajet optique du faisceau de mesure ;
une unité de réception de lumière (130, 130a, 130b, 130c) configurée pour recevoir le faisceau d'interférence à partir de l'interféromètre (120) et convertir le faisceau d'interférence reçu en un signal électrique ;

une unité de traitement (59, 75, 150) configurée pour mesurer une distance jusqu'à la cible de mesure (T) sur la base du signal électrique converti par l'unité de réception de lumière (130, 130a, 130b, 130c) ; et
une unité de stockage (140) configurée pour stocker des informations de distance indiquant la distance mesurée,
dans lequel le motif de fréquence de balayage prédéterminé inclut un premier motif de fréquence de balayage et un second motif de fréquence de balayage,
dans lequel l'unité de traitement (59, 75, 150) inclut une unité de calcul de valeur de distance moyenne (153) configurée pour calculer une valeur de distance moyenne sur la base de :

la distance mesurée,
des premières informations de distance indiquant une distance sur la base d'un faisceau de lumière projeté en utilisant le premier motif de fréquence de balayage, et
des secondes informations de distance indiquant une distance sur la base d'un faisceau de lumière projeté en utilisant le second motif de fréquence de balayage,

dans lequel les premières et secondes informations de distance sont des informations de distance passée concernant de multiples mesures stockées dans l'unité de stockage (140),
dans lequel les premières informations de distance indiquent une distance passée une fois avant la distance mesurée, et les secondes informations de distance indiquent une distance passée deux fois avant la distance mesurée, et
dans lequel l'unité de calcul de valeur de distance moyenne (153) calcule la valeur de distance moyenne sur la base d'une première valeur moyenne de la distance mesurée et de la distance indiquée par les premières informations de distance, et d'une seconde valeur moyenne de la distance indiquée par les premières informations de distance et de la distance indiquée par les secondes informations de distance.

2. Capteur de plage d'interférence optique (100) selon la revendication 1,
dans lequel le premier motif de fréquence de balayage est un motif qui augmente une fréquence de balayage au fil du temps, et le second motif de fréquence de balayage est un motif qui diminue la fréquence de balayage au fil du temps.

3. Capteur de plage d'interférence optique (100) selon l'une quelconque des revendications 1 à 2,
dans lequel la source de lumière (51, 110) utilise en alternance le premier motif de fréquence de balayage et le second motif de fréquence de balayage.

4. Capteur de plage d'interférence optique (100) selon l'une quelconque des revendications 1 à 3,

dans lequel l'unité de traitement (59, 75, 150) inclut en outre une unité de conversion de fréquence (151) configurée pour convertir le signal électrique converti par l'unité de réception de lumière (130, 130a, 130b, 130c) en un spectre de fréquence, et
la distance jusqu'à la cible de mesure (T) est mesurée sur la base du spectre de fréquence.

5. Capteur de plage d'interférence optique (100) selon la revendication 4,
dans lequel l'unité de traitement (59, 75, 150) inclut en outre une unité de conversion de distance (152) configurée pour convertir le spectre de fréquence converti par l'unité de conversion de fréquence (151) en la distance jusqu'à la cible de mesure (T).

**FIG. 1**

START

INSTALL SENSOR HEAD — S11

SET MEASUREMENT
CONDITIONS — S12

MEASUREMENT — S13

OUTPUT MEASUREMENT
RESULT — S14

END

**FIG. 2**

SENSOR SYSTEM 1

10

DISPLACEMENT SENSOR

11

CONTROL DEVICE (PLC)

12

CONTROL SIGNAL INPUT SENSOR

EXTERNALLY CONNECTED DEVICE (PC)

13

# FIG. 3

```
        ┌─────────────┐
        │    START    │
        └─────────────┘
               │
               ▼
    ┌────────────────────────┐
    │ DETECT MEASUREMENT     │ ─────── S21
    │ TARGET                 │
    └────────────────────────┘
               │
               ▼
    ┌────────────────────────┐
    │ GIVE MEASUREMENT       │
    │ INSTRUCTION TO         │ ─────── S22
    │ DISPLACEMENT SENSOR    │
    └────────────────────────┘
               │
               ▼
    ┌────────────────────────┐
    │ PERFORM MEASUREMENT    │
    │ USING DISPLACEMENT     │ ─────── S23
    │ SENSOR                 │
    └────────────────────────┘
               │
               ▼
    ┌────────────────────────┐
    │ OUTPUT MEASUREMENT     │ ─────── S24
    │ RESULT                 │
    └────────────────────────┘
               │
               ▼
        ┌─────────────┐
        │     END     │
        └─────────────┘
```

FIG. 4

DISPLACEMENT SENSOR 10

CONTROLLER 30

MAIN INTERFEROMETER (3 CHANNELS)

55
SENSOR HEAD 20
ATTENUATOR

59
58c AD CONVER-SION UNIT
57c AMPLIFIER CIRCUIT
56c LIGHT-RECEIVING ELEMENT
54c
22c
21
MEASUREMENT TARGET T

PROCESSING UNIT
58b AD CONVER-SION UNIT
57b AMPLIFIER CIRCUIT
56b LIGHT-RECEIVING ELEMENT
53b
54b
22b

58a AD CONVER-SION UNIT
57a AMPLIFIER CIRCUIT
56a LIGHT-RECEIVING ELEMENT
53a
54a
22a

54

WAVELENGTH-SWEPT LIGHT SOURCE
OPTICAL AMPLIFIER
53

60

51
52
53

CORRECTION SIGNAL GENERATION UNIT

54d
54e

SECONDARY INTERFEROMETER

61

------- ELECTRICAL SIGNAL
——— OPTICAL SIGNAL

**FIG. 5A**

EP 4 242 577 B1

FIG. 5B

SENSOR HEAD 20

23

21

FIG. 6A

**FIG. 6B**

OPTICAL FIBER CABLE

EP 4 242 577 B1

CONTROLLER 30

MAIN INTERFERENCE SIGNAL

PHOTOCURRENT

LIGHT-RECEIVING ELEMENT 71a

LIGHT-RECEIVING ELEMENT 71b

LIGHT-RECEIVING ELEMENT 71c

72a 72b 72c

AMPLIFIER CIRCUIT

VOLTAGE SIGNAL

74a

AD CONVERSION UNIT

AD CONVERSION UNIT 74b

AD CONVERSION UNIT 74c

DIGITAL SIGNAL

PROCESSING UNIT

DISTANCE VALUE

75

K-CLOCK SIGNAL

SECONDARY INTERFERENCE SIGNAL

PHOTOCURRENT

LIGHT-RECEIVING ELEMENT 71d

LIGHT-RECEIVING ELEMENT 71e

DIFFERENTIAL AMPLIFIER CIRCUIT

VOLTAGE SIGNAL

CORRECTION SIGNAL GENERATION UNIT

FIG. 7

```
                    ┌─────────────┐
                    │    START    │
                    └──────┬──────┘
                           │
                           ▼
         ┌─────────────────────────────┐
         │            FFT              │  ⟍   S31
         └──────────────┬──────────────┘
                        │
                        ▼
         ┌─────────────────────────────┐
         │     DISTANCE CONVERSION     │  ⟍   S32
         └──────────────┬──────────────┘
                        │
                        ▼
         ┌─────────────────────────────┐
         │       PEAK DETECTION        │  ⟍   S33
         └──────────────┬──────────────┘
                        │
                        ▼
         ┌─────────────────────────────┐
         │          AVERAGING          │  ⟍   S34
         └──────────────┬──────────────┘
                        │
                        ▼
                 ┌─────────────┐
                 │     END     │
                 └─────────────┘
```

**FIG. 8**

FIG. 9A

DISTANCE CONVERSION

VOLTAGE

VOLTAGE

FREQUENCY

DISTANCE

**FIG. 9B**

FIG. 9C

OPTICAL INTERFERENCE RANGE SENSOR 100

120

INTERFEROMETER

REFERENCE SURFACE

MEASUREMENT TARGET T

121

123b  123a

124

110

WAVELENGTH-SWEPT LIGHT SOURCE

SPLITTING UNIT

A

B

C

SENSOR HEAD

123c

122

130a          130b          130c

a             b             c

131a          131b          131c

LIGHT-RECEIVING ELEMENT

LIGHT-RECEIVING ELEMENT

LIGHT-RECEIVING ELEMENT

132a          132b          132c

AD CONVERSION UNIT

AD CONVERSION UNIT

AD CONVERSION UNIT

150

FREQUENCY CONVERSION UNIT — 151

140

DISTANCE CONVERSION UNIT — 152

STORAGE UNIT

AVERAGE DISTANCE VALUE CALCULATION UNIT — 153

PROCESSING UNIT

FIG. 10

EP 4 242 577 B1

SWEEP FREQUENCY

| SECOND SWEEP FREQUENCY PATTERN | FIRST SWEEP FREQUENCY PATTERN | SECOND SWEEP FREQUENCY PATTERN | FIRST SWEEP FREQUENCY PATTERN | SECOND SWEEP FREQUENCY PATTERN | FIRST SWEEP FREQUENCY PATTERN |

−300μs    −250μs    −200μs    −150μs    −100μs    −50μs    0μs    TIME

$d_{-5}$    $d_{-4}$    $d_{-3}$    $d_{-2}$    $d_{-1}$    $d_0$    DISTANCE

PAST    PRESENT

FIG. 11

EP 4 242 577 B1

**FIG. 12**

EP 4 242 577 B1

**FIG. 13**

EP 4 242 577 B1

FIG. 14A

FIG. 14B

**FIG. 14C**

EP 4 242 577 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022038129 A
- JP 2686124 A

- JP 2013238474 A

**Non-patent literature cited in the description**

- **ALEXANDRE CABRAL**. *Dual-frequency sweeping interferometry for absolute metrology of long distances*